# EUROPEAN PATENT SPECIFICATION

(11) **EP 1 094 649 B1**
(45) Date of publication and mention of the grant of the patent: **28.02.2007**
(21) Application number: 00480055.3
(22) Date of filing: 20.06.2000
(51) Int. Cl.: H04L 29/06, H04L 29/08

(54) **Method and system of enforcing the dispatching of IP datagrams on a plurality of servers according to a defined policy**
Verfahren und System ,um das Verteilen von IP-Datagrammen auf mehrere Server gemäss einer definierten strategie zu erzwingen
Porcédé et système de mise en place la repartition de datagrammes IP sur plusieurs serveurs selon une politique definie

(30) Priority: 21.10.1999 EP 99480108
(43) Date of publication of application: 25.04.2001
(73) Proprietor: International Business Machines Corporation, Armonk, NY 10504 (US)
(72) Inventor: Hericourt, Olivier, 06800 Cagnes sur Mer (FR)
(74) Representative: Etorre, Yves Nicolas

(56) References cited:
- EP-A- 0 909 075
- WO-A-99/06913
- US-A- 5 341 477

## Description

### Technical field of the invention

The present invention relates to computer networks, and more particularly to a method and system in an Internet Protocol (IP) network of enforcing the dispatching of Internet Protocol (IP) datagrams on a plurality of servers according to a defined policy.

### Background art

### INTERNET

Internet is a global network of computers and computers networks (the "Net"). The Internet connects computers that use a variety of different operating systems or languages, including UNIX, DOS, Windows, Macintosh, and others. To facilitate and allow the communication among these various systems and languages, the Internet uses a language referred to as TCP/IP ("Transmission Control Protocol/Internet Protocol"). TCP/IP protocol supports three basic applications on the Internet :
- transmitting and receiving electronic mail,
- logging into remote computers (the "Telnet"), and
- transferring files and programs from one computer to another ("FTP" or "File Transfer Protocol").

The TCP/IP protocol suite is named for two of the most important protocols:
- a Transmission Control Protocol (TCP), and
- an Internet Protocol (IP).

Another name for it is the Internet Protocol Suite. The more common term TCP/IP is used to refer to the entire protocol suite. The first design goal of TCP/IP is to build an interconnection of networks that provide universal communication services: an *internetwork,* or *internet.* Each physical network has its own technology dependent communication interface, in the form of a programming interface that provides basic communication functions running between the physical network and the user applications. The architecture of the physical networks is hidden from the user. The second goal of TCP/IP is to interconnect different physical networks to form what appears to the user to be one large network.

TCP is a transport layer protocol providing end to end data transfer. It is responsible for providing a reliable exchange of information between 2 computer systems. Multiple applications can be supported simultaneously over one TCP connection between two computer systems.

IP is an internetwork layer protocol hiding the physical network architecture bellow it. Part of the communicating messages between computers is a routing function that ensures that messages will be correctly directed within the network to be delivered to their destination. IP provides this routing function. An IP message is called an IP Datagram.

Application Level protocols are used on top of TCP/IP to transfer user and application data from one origin computer system to one destination computer system. Such Application Level protocols are for instance File Transfer Protocol (FTP), Telnet, Gopher, Hyper Text Transfer Protocol (HTTP).

### IP ROUTER

A "Router" is a computer that interconnects two networks and forwards messages from one network to the other. Routers are able to select the best transmission path between networks. The basic routing function is implemented in the IP layer of the TCP/IP protocol stack, so any host (or computer) or workstation running TCP/IP over more than one interface could, in theory, forward messages between networks. Because IP implements the basic routing functions, the term "IP Router" is often used. However, dedicated network hardware devices called "Routers" can provide more sophisticated routing functions than the minimum functions implemented in IP.

### WORLD WIDE WEB

With the increasing size and complexity of the Internet, tools have been developed to help find information on the network, often called navigators or navigation systems. Navigation systems that have been developed include standards such as Archie, Gopher and WAIS. The World Wide Web ("WWW" or "the Web") is a recent superior navigation system. The Web is
- an Internet-based navigation system,
- an information distribution and management system for the Internet, and
- a dynamic format for communicating on the Web.
The Web seamlessly, for the use, integrates format of information, including still images, text, audio and video. A user on the Web using a graphical user interface ("GUI", pronounced "gooey") may transparently communicate with different host computers on the system, and different system applications (including FTP and Telnet), and different information formats for files and documents including, for example, text, sound and graphics.

### HYPERMEDIA

The Web uses hypertext and hypermedia. Hypertext is a subset of hypermedia and refers to computer-based "documents" in which readers move from one place to another in a document, or to another document, in a non-linear manner. To do this, the Web uses a client-server architecture. The Web servers enable the user to access hypertext and hypermedia information through the Web and the user's computer. (The user's computer is referred to as a client computer of the Web Server computers.) The clients send requests to the Web Servers, which react, search and respond. The Web allows client application software to request and receive hypermedia documents (including formatted text, audio, video and graphics) with hypertext link capabilities to other hypermedia documents, from a Web file server.
The Web, then, can be viewed as a collection of document files residing on Web host computers that are interconnected by hyperlinks using networking protocols, forming a virtual "web" that spans the Internet.

### UNIFORM RESOURCE LOCATORS

A resource of the Internet is unambiguously identified by an Uniform Resource Locator (URL), which is a pointer to a particular resource at a particular location. A URL specifies the protocol used to access a server (e.g. HTTP, FTP,..), the name of the server, and the location of a file on that server.

### HYPER TEXT TRANSFER PROTOCOL

Each Web page that appears on client monitors of the Web may appear as a complex document that integrates, for example, text, images, sounds and animation. Each such page may also contain hyperlinks to other Web documents so that a user at a client computer using a mouse may click on icons and may activate hyperlink jumps to a new page (which is a graphical representation of another document file) on the same or a different Web server.

A Web server is a software program on a Web host computer that answers requests from Web clients, typically over the Internet. All Web use a language or protocol to communicate with Web clients which is called Hyper Text Transfer Protocol ("HTTP"). All types of data can be exchanged among Web servers and clients using this protocol, including Hyper Text Markup Language ("HTML"), graphics, sound and video. HTML describes the layout, contents and hyperlinks of the documents and pages. Web clients when browsing :
- convert user specified commands into HTTP GET requests,
- connect to the appropriate Web server to get information, and
- wait for a response. The response from the server can be the requested document or an error message.

After the document or an error message is returned, the connection between the Web client and the Web server is closed.

First version of HTTP is a stateless protocol. That is with HTTP, there is no continuous connection between each client and each server. The Web client using HTTP receives a response as HTML data or other data. This description applies to version 1.0 of HTTP protocol, while the new version 1.1 break this barrier of stateless protocol by keeping the connection between the server and client alive under certain conditions.

### BROWSER

After receipt, the Web client formats and presents the data or activates an ancillary application such a sound player to present the data. To do this, the server or the client determines the various types of data received. The Web Client is also referred to as the Web Browser, since it in fact browses documents retrieved from the Web Server.

### DOMAIN NAMES

The host or computers names (like www.entreprise.com) are translated into numeric Internet addresses (like 194.56.78.3), and vice versa, by using a method called DNS ("Domain Name Service"). DNS is supported by network-resident servers, also known as domain name servers or DNS servers.

### INTRANET

Some companies use the same mechanism as the Web to communicate inside their own corporation. In this case, this mechanism is called "Intranet". These companies use the same networking/transport protocols and locally based Web servers to provide access to vast amount of corporate information in a cohesive fashion. As this data may be private to the corporation, and because the members of the company still need to have access to public Web information, they protect the access to their network by using a special equipment called a Firewall. A Firewall is used to avoid that people not belonging to the company can access to the private Intranet coming from the public Internet.

### FIREWALL

A Firewall protects one or more computers with Internet connections from access by external computers connected to the Internet. A Firewall is a network configuration, usually created by hardware and software, that forms a boundary between networked computers within the Firewall from those outside the Firewall. The computers within the Firewall form a secure sub-network with internal access capabilities and shared resources not available from outside computers.

Often, the access to both internal and external computers is controlled by a single machine, said machine comprising the Firewall. Since the computer, on which the Firewall is, directly interacts with the Internet, strict security measures against unwanted access from external computers are required.

A Firewall is commonly used to protect information such as electronic mail and data files within a physical building or organization site. A Firewall reduces the risk of intrusion by unauthorized people from the Internet. The same security measures can limit or require special software for people inside the Firewall who wish to access information on the outside. A Firewall can be configured using "Proxies" or "Socks" to control the access to information from each side of the Firewall.

### PROXY SERVER

A HTTP Proxy is a special server that allows an access to the Internet. It typically runs in conjunction with Firewall software. The Proxy Server :
- waits for a request (for example a HTTP request) from inside the Firewall,
- forwards the request to the remote server outside the Firewall,
- reads the response, and
- sends the response back to the client.

A single computer can run multiple servers, each server connection identified with a port number. A Proxy Server, like an HTTP Server or a FTP Server, occupies a port. Typically, a connection uses standardized port numbers for each protocol (for example, HTTP = 80 and FTP = 21). That is why an end user has to select a specific port number for each defined Proxy Server. Web Browsers usually let the end user set the host name and port number of the Proxy Servers in a customizable panel. Protocols such as HTTP, FTP, Gopher, WAIS, and Security can usually have designated Proxies. Proxies are generally preferred over Socks for their ability to perform caching, high-level logging, and access control, because they provide a specific connection for each network service protocol.

### HTTP CACHING

HTTP is an Application Level protocol used by the TCP connections between WEB Browsers and HTTP Proxy Servers. Consequently, IP Datagrams exchanged between the WEB Browsers and HTTP Proxy Servers comprises HTTP data. Since HTTP Proxy Servers terminate and manage the HTTP connections, they see and handle the HTTP data comprised in the IP Datagrams and they can store a local copy of HTTP data in an internal cache.

When a HTTP Proxy Server receives from a source system (a WEB Browser) a request to retrieve HTTP data (a WEB page) located on a destination system (a WEB server), two situations can occurs depending on the requested HTTP data is already stored in the local cache, or not.
- If the requested HTTP data is already located in the local cache, the HTTP Proxy Server immediately sends a response to the source system with the data stored in the cache.
- If the requested HTTP data is not located in the local cache, the HTTP Proxy Server forwards the request to the destination WEB system (the WEB server). When the HTTP Proxy Server receives from this destination WEB system (the WEB Server) the response comprising the HTTP data (the WEB page), it caches said HTTP data (the WEB page) in its local cache, and forwards the response to the source system (the WEB Browser) .

When HTTP data are already located within the cache, the request do not need to be forwarded by the HTTP Proxy Server to the destination WEB system. A response is immediately returned by the HTTP Proxy server.

The HTTP Caching provides several advantages:
- The response time of the HTTP service is improved. The HTTP Proxy Server immediately answers the request to retrieve HTTP data when said HTTP data is already stored in the cache of the HTTP Proxy Server.
- The utililization of network resources is optimized. No traffic is required between the HTTP Proxy server and the destination WEB system for requested HTTP data already stored in the cache.

### SOCKS AND SOCKS SERVER

Socks is a protocol which does some form of encapsulation of Application Level protocols (for instance FTP, Telnet, Gopher, HTTP). Using Socks, the Application Level traffic between a system running a Socks Client software and a system running a Socks Server software is encapsulated in a virtual Socks tunnel between both systems. Socks is mainly used by systems within an Intranet in order to gain a secure access to systems located outside the Intranet.

A Socks Server acts as a relay between the systems within the Intranet and the systems outside the Intranet, thus hiding the internal systems from the external Internet. It is considered as one form of Firewall.

A Socks Server (also called Socks Gateway) is a software that allows computers inside a Firewall to gain access to the Internet. A Socks Server is usually installed on a server positioned either inside or on the Firewall. Computers within the Firewall access the Socks Server as Socks Clients to reach the Internet. Web Browsers usually let the end user set the host name and port number of the Socks Servers in a customizable panel. On some Operating Systems, the Socks Server is specified in a separate file (e.g. socks.conf file). As the Socks Server acts a layer underneath the protocols (HTTP, FTP, ..), it cannot cache data (as Proxy does), because it doesn't decode the protocol to know what kind of data it transfers.

### OPTIONS

The Web Browser often proposes the end user to select between the different options "No Proxies", "Manual Proxy Configuration", or "Automatic Proxy Configuration" to designate the connection between his computer and the Internet.
- Users with a direct connection to the Internet should use the default option, which is "No Proxies".
- If the Intranet is protected by one or several Firewalls, the end user may :
   - select one of these Firewalls as the elected Proxy, by entering its host name into the "Manual Proxy Configuration", or
   - automatically refers to the enterprise policy in terms of Proxies attribution between locations, by pointing to a common configuration file in a remote server. This is done by choosing the "Automatic Proxy Configuration" and by providing the Web Browser with the unique address of the common configuration file ("Universal Resource Locator" or "URL") located in the remote server.

Today, most of the Web Browsers are configured to forward all requests - even requests for internal hosts - through the Socks Firewall. So when an end user wants to access an internal Web-based application, his request travels to the Firewall, and is then reflected back into the internal network. This mechanism generates internal traffic over a long path, puts extra load on the Firewall and on the network, and worst of all, slows down the response time the end user sees from the applications and Web pages he tries to access. This is called "non flexible" Socks access (when everything goes via the Socks Server).

### MANUAL PROXY CONFIGURATION

The Manual Proxy configuration in the Web Browser is simple to process. However, the main drawback is that the Firewall (or Proxy) selection is static. There is no dynamic criterion for selecting the Firewall, such as selecting the Firewall according to the response time. Firewall failures require a manual reconfiguration of the navigation software to point to another active Firewall, since the manual configuration usually only allows the definition of one single Firewall per protocol with no possibility to pre-configure a backup Firewall. In addition to the manual proxy configuration in the Web Browser, external procedures can be used to provide some kind of robustness in the Firewall selection. They rely for instance on the use of multiple Firewalls having the same name defined as aliases in the Domain Name Server (DNS). But this technique based on alias definition still has drawbacks since for instance the DNS is not always contacted for name resolution (association between name and IP address) by Web Clients when said WEB Clients locally cache the name resolution. Other techniques using external hardware equipment such as load and request dispatcher provide more robustness and load balancing, but still have drawbacks such as the need for additional and costly hardware.

### AUTOMATIC PROXY CONFIGURATION

Automatic Proxy Configuration (or also referred to as "autoproxy") can set the location of the HTTP, FTP, and Gopher Proxy every time the Web Browser is started. An autoproxy retrieves a file of address ranges and instructs the Web Browser to either directly access internal IBM hosts or to go to the Socks Server to access hosts on the Internet.

Automatic Proxy Configuration is more desirable than simple Proxy Server Configuration in the Web Browser, because much more sophisticated rules can be implemented about the way Web pages are retrieved (directly or indirectly). Automatic Proxy Configuration is useful to users, because the Web Browser knows how to retrieve pages directly if the Proxy Server fails. Also Proxy requests can be directed to another or multiple Proxy Servers at the discretion of the system administrator, without the end user has to make any additional changes to his Web Browser configuration. In general, these Proxy configuration files (also called "autoproxy code") are usually written in Javascript language. Autoproxy facility can also contain a file of address ranges for instructing the Web Browser to either directly access internal hosts or to go to the Socks Server to access hosts on the Internet. The Socks Server protects the internal network from unwanted public access while permitting access of network members to the Internet. One of the drawbacks of this "autoproxy" mechanism is that there is no proactive Firewall failure detection nor response time consideration.

More explanations about the technical field presented in the above sections can be found in the following publications incorporated herewith by reference:
- "TCP/IP Tutorial and Technical Overview" by Martin W. Murhammer, Orcun Atakan, Stefan Bretz, Larry R. Pugh, Kazunari Suzuki, David H. Wood, International Technical Support Organization, October 1998, GG24-3376-05.
- "Java Network Programming" by Elliotte Rusty Harold, published by O'Reilly, February 1997.
- "Internet in a nutshell" by Valerie Quercia, published by O'Reilly, October 1997.
- "Building Internet Firewalls" by Brent Chapman and Elizabeth Zwichky, published by O'Reilly, September 1995.

### PROBLEM

The problem to solve is to police the WEB traffic within the Intranet.

When multiple Proxy Servers are used by source devices within the Intranet (for instance workstations running a WEB Browser software) to get access to WEB systems located within the Internet, access rules are usually defined by the Network Administator. The purpose of said access rules is to define the Proxy Server that should be used by each source device (workstation) or each group of source devices (group of workstations) within the Intranet, to get access to WEB systems located within the Intranet. For instance, source devices located in France should use a Proxy Server located in France, while source devices located in Germany should use a Proxy Server located in Germany.

Said access rules may be different according to the Application Level protocol (ALP). ALP traffic refers to IP Datagrams comprising data using said ALP (for instance, HTTP traffic is referring to all IP Datagrams comprising HTTP data). For instance, the access rules may stipulate that source devices located in Belgium should access one specific Proxy Server located in France for HTTP traffic, and should access another specific Proxy Server located in Belgium for FTP traffic. These access rules define a policy for accessing the WEB from the Intranet, and are therefore called "WEB access policy" or "WEB traffic policy". The main goals of said WEB traffic policy are to:
- Optimize the network resources within the Intranet. For instance, the specifications and therefore the cost of a Proxy Server depend on the number of source devices which will have access to it. A Proxy Server which will be accessed by 500 source devices will be smaller and therefore cheaper than a Proxy Server which will be accessed by 10000 source devices.
- Improve the performances of the WEB access service (access from source devices to WEB systems located within the Intranet). For instance, a Proxy Server set-up in Francet is configured to provide a WEB access service to a specified number of source devices in France. When more source devices (for instance source devices located in Belgium) than expected are accessing said Proxy Server, the performance of said Proxy server may be degraded and may have an impact on the WEB access service.
- Optimize the utilisation of network resources, in particular, minimize the bandwidth required within the Intranet for accessing WEB systems. For instance, when a source device located in France wants to access a WEB system through a Proxy Server, said source device should use a Proxy Server located in France instead of a Proxy server located in Japan, in order to minimize the path (and consequently to minimize the network resources utilization and the bandwidth between France and Japan) within the Intranet to reach the Proxy server.
- Take advantage of WEB traffic caching, since Proxy Servers usually provide HTTP and FTP caching:
   - The utilisation of the network resources located between the Proxy Server and the WEB system is optimized. No traffic is required between the Proxy Server and the destination WEB system, when HTTP data requested by a source device is already located within the cache of said Proxy Server.
   - The response time of the HTTP service is improved. The requests to retrieve HTTP data already located within the cache on the HTTP Proxy Server, are immediately satisfied by the HTTP Proxy Server.
It is generally admitted that an efficient WEB Caching must be done as close as possible to source devices. Thus, it is important for said source devices to have access to a Proxy server located close to them.

The problem is to apply the WEB access policy within the whole Intranet. For instance, when the WEB access policy defines that source devices located in France should use one specific Proxy Server located in France, the problem is to make sure that said source devices actually use said specific Proxy Server and do not use instead another Proxy Server (for instance located in Japan).

The current solutions address this problem partially:
- The WEB Application software (for instance a WEB Browser) running on the workstation can be manually configured with the target Proxy Servers. The main drawback of this solution is the following :
   - Proxy Server names must be known and manually configured by end users. Wrong Proxy Server names may then be entered by end users, and the WEB traffic policy is then not applied. For instance, an end user located in Toulouse (France) may manually configure his WEB Browser to use a Proxy Server located in Paris instead of a Proxy Server located in Toulouse.
- Web Browsers can be configured with their autoproxy feature. In this case, a static list of target Proxy Servers (a WEB traffic policy) is downloaded to the WEB Browser from a dedicated autoproxy URL (Uniform Resource Locator) system. The main drawbacks of this solution are the following:
   - The end user must configure his WEB Browser to use the autoproxy feature. If the end user does not configure his WEB Browser correctly, the WEB traffic policy is then not applied.
- The autoproxy feature has to be implemented within the Intranet. For instance, an autoproxy code must be implemented on the autoproxy URL system.

WO9906913 (Arrowpoint Communications Inc.), entitled "Content-aware flow switching" discloses a content-aware flow switch which intercepts a content request from a client in an IP network, and seamlessly forwards the content request to a server that is well-suited to serve the content request. The server is chosen by the flow switch based on the type of content requested, the QoS requirements implied by the content request, the degree of load on available servers, network congestion information, and the proximity of the client to available servers. The entire process of server selection is transparent to the client.

European Patent Application EP-A-0909075 (Lucent Technologies Inc.) entitled "Methods and apparatus for a computer network firewall with cache query processing" discloses an improved computer network firewalls which include one or more features for increased processing efficiency. A firewall in accordance with the invention can support multiple security policies, multiple users or both, by applying any one of several distinct sets of access rules. The firewall can also be configured to utilize "stateful" packet filtering which involves caching rule processing results for one or more packets, and then utilizing the cached results to bypass rule processing for subsequent similar packets. To facilitate passage to a user, by a firewall, of a separate later transmission which is properly in response to an original transmission, a dependency mask can be set based on session data items such as source host address, destination host address, and type of service. The mask can be used to query a cache of active sessions being processed by the firewall, such that a rule can be selected based on the number of sessions that satisfy the query. Dynamic rules may be used in addition to pre-loaded access rules in order to simplify rule processing. To unburden the firewall of application proxies, the firewall can be enabled to redirect a network session to a separate server for processing.

### Objects of the invention

- An object of the present invention is to enforce the dispatching of Internet Protocol (IP) datagrams on a plurality of servers according to a defined policy.
- It is another object of the present invention to optimize the performances of the WEB access service, by enforcing the source devices to access the Internet though specific Proxy Servers according to a particular WEB traffic policy.
- It is yet another object of the present invention to optimize the utilisation of the Intranet network resources, by reducing the WEB traffic within the Intranet network.
- It is a further object of the present invention to simplify the configuration of the devices source of the WEB traffic within the Intranet.

### Summary of the invention

The objects are met by the present invention as defined in the appended independent claims. The dependent claims relate to preferred modifications thereof.

### Brief description of the Drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1 is a logical view of an end user system accessing the World Wide Web, according to prior art.
- Figure 2 is a general view of an end user system accessing the World Wide Web according to prior art.
- Figure 3 shows an IP Datagram according to prior art.
- Figure 4 shows an end user workstation with a plurality of Proxy Servers according to prior art.
- Figure 5 shows a system for policing WEB traffic, according to the present invention.
- Figure 6 shows the tables used by the WEB Traffic Policing Extension, according to the present invention.
- Figure 7 is a flow chart of the Policing Definition Builder component, according to the present invention.
- Figure 8 is a flow chart of the Traffic Analyser component, according to the present invention.
- Figure 9 is a flow chart of the Inbound Policing Handler component, according to the present invention.
- Figure 10 is a flow chart of the Outbound Policing Handler component, according to the present invention.
- Figure 11 is a flow chart of the Policing Manager component, according to the present invention.

### Preferred embodiment of the invention

### ACCESS TO THE WORLD WIDE WEB

### Logical View

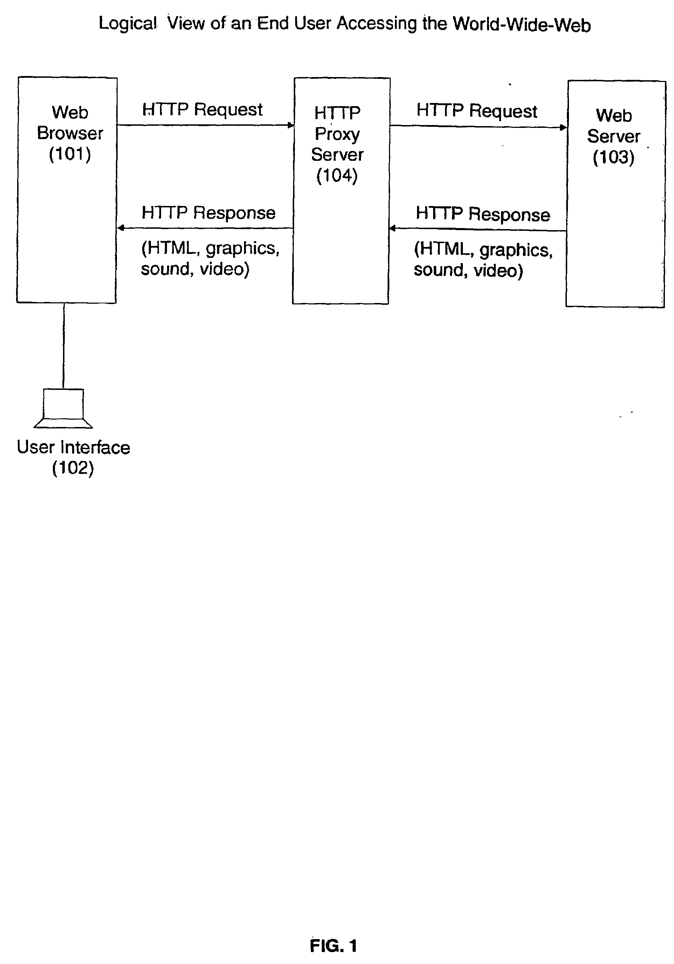

Figure 1 shows a user system with a user interface (102) comprising a Web Browser (101) for accessing the World-Wide-Web (WWW). The WWW content is transferred using the HTTP protocol. HTTP requests and responses are exchanged between the Web Browser program (101) and a destination Web Server (103) containing the WWW information the user wants to access. The HTTP Proxy Server (104) between the Web Browser (101) and the Web Server (103) acts as an intermediary HTTP Relay forwarding the HTTP requests and responses to their destination. The Web Browser program (101) makes an HTTP request to the HTTP Proxy Server (104) and the HTTP Proxy Server forwards the request to the destination Web Server (103). The flow in the reverse direction (HTTP response) again goes via the HTTP Proxy Server (104) to the Web Browser (101). In this way the HTTP Proxy Server can limit the traffic to authorised transactions according to its configuration (based on some defined security and access control policy). The HTTP Proxy Server hence protects the network where Web Browser is located.

### Physical View

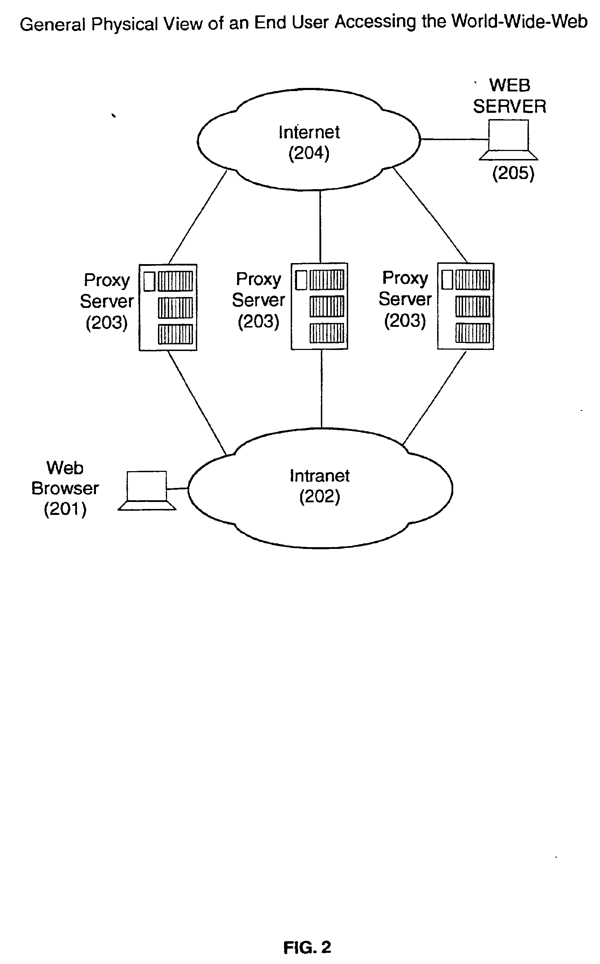

Figure 2 is a physical view of the set-up logically described in Figure 1. In this particular example, the Web Browser (201) runs on a system (workstation) connected to an Intranet (202) network. The Intranet network comprises network devices such as IP Routers. The Proxy Servers (203) protecting the Intranet connect both the (private) Intranet (202) and the (public) Internet (204). the destination Web Server (205) is also connected to the Internet. It is important to note that Proxy Servers attach two networks and hence act as intermediaries for communications between said two networks. Multiple Proxy Servers are often used in order to provide access robustness and load sharing.

### IP DATAGRAM

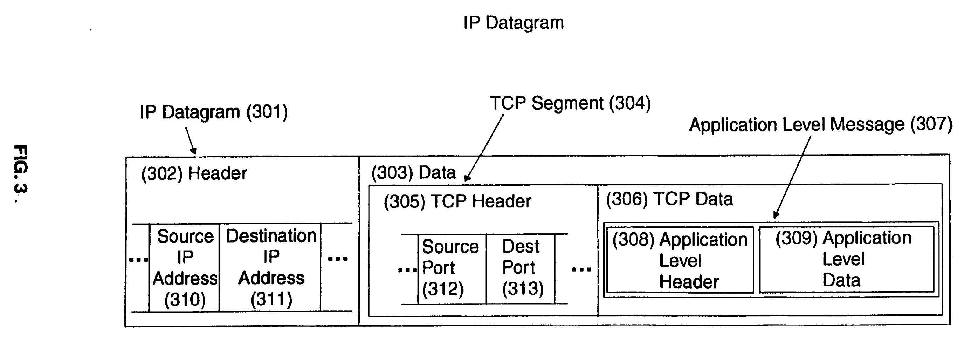

The transfer unit of a data packet in TCP/IP is called an IP Datagram. It is made up of a header containing information for IP protocol and data that is only relevant to the higher level protocol. Figure 3 shows the format of a IP Datagram, in the environment described in Figures 1 and 2:
- (301) ***IP Datagram**.* an IP Datagram is a message exchanged between 2 computer systems across a TCP/IP network. An IP Datagram is divided in 2 parts:
   - a Header, and
   - Data.
- (302) ***IP Datagram Header.*** the header comprises fields such as:
   - the Source IP Address (310) (the IP address of the computer which sends the IP Datagram).
   - the Destination IP Address (311) (the IP address of the computer which is the destination of the IP Datagram).
   The IP Datagram Header is mainly used to route the IP Datagram to its final destination.
- (303) ***IP Datagram Data.*** This field comprises the data sent by the originator to the destination computer system. The destination computer system processes this data. Since the TCP/IP protocol suite is organised in layers, the IP Datagram field comprises the message relevant to the higher level protocol (which is TCP in the environment related to the invention).
   - (304) ***TCP Segment.*** A TCP message is usually called TCP Segment.
      - (305) ***TCP Header.*** A TCP Header comprises fields such as the Source Port (312) and the Destination Port (313) which identify the application level protocol (e.g. HTTP, FTP, Telnet, Socks) transported by TCP. This field is mainly used by the destination of the IP Datagram to determine which application must process the data transported by TCP.
   - (306) ***TCP Data.*** The TCP Data field comprises application data which are sent by the originator to the destination computer system. The destination computer system processes the data. Since the TCP/IP protocol suite is organised in layers, the TCP Data part comprises the information relevant to the higher level protocol which is the Application level protocol (such as HTTP, FTP, Telnet, Socks).
      - (307) ***Application Level Message.*** The TCP Data part of the IP Datagram contains an Application Level Message. This is for example a Socks message, a HTTP message, a FTP message, or a Telnet message. Depending on the Application level protocol, this Application Level Message can also be split in two parts.
      - (308) ***Application Level Header.*** The Application Level Header is the header relevant to the application protocol such as HTTP, FTP, Telnet.
      - (309) ***Application Level Data.*** This is the data part which is processed by the application responsible of handling the Application Level protocol. This is usually the data which is directly relevant to the end user (for instance, data entered by an end user on his workstation).

### WEB BROWSER AND PROXY SERVER

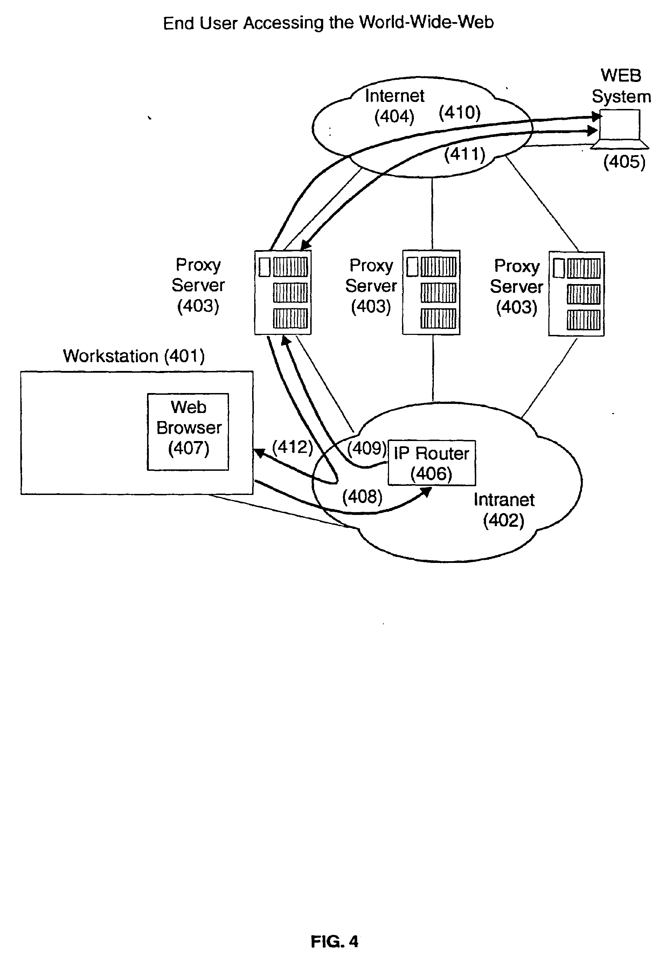

Figure 4 shows an end user workstation (401) connected to an Intranet (402). The Proxy Servers (403) that protect the Intranet attach both the (private) Intranet (402) and the (public) Internet (404). The destination Web System (405) also connects the Internet (the Web System is for instance a WEB Server, a FTP Server, or any system attached to the Internet that can be accessed from the Intranet).

Each Proxy Server (403) stores in a local cache a local copy of the HTTP (and possibly FTP) data retrieved from WEB systems located on the Internet by workstations located on the Intranet.

The end user workstation (401) comprises a software program called WEB Browser (406). The WEB Browser is configured to access WEB systems located on the Internet, through a Proxy Server (403).

When the WEB Browser wants to retrieve HTTP data (for instance a WEB page) from a destination WEB system (405), the end user workstation sends (408) an IP Datagram comprising a request to retrieve said HTTP data to a destination Proxy Server on the Intranet network. IP Routers within the Intranet receive the IP Datagram and route it (409) towards its destination. Each IP Router determine the next hop within the Intranet, using the Destination IP Address field in the IP Datagram Header.

When the Proxy Server receives from the workstation a request to retrieve HTTP data (a WEB page) located on a destination WEB system (a WEB server), the requested HTTP data is either already located in the local cache, or is not located in the local cache:
- If the requested HTTP data is already located in the cache, the HTTP Proxy Server immediately answers (412) the request with a response comprising the data in the cache.
- If the requested HTTP data is not located in the cache, the HTTP Proxy Server forwards (410) the request to the destination WEB system (the WEB server). When the HTTP Proxy Server receives a response (411) comprising the HTTP data (the WEB page) from the destination WEB system (the WEB Server), said HTTP data (the WEB page) are locally cached, and forwarded (412) to the originator system (the WEB Browser).

The workstation can also comprise a Socks Client software in order to get access to WEB systems located on the Internet. In this case, said access is done through Socks Servers systems instead of being done through Proxy Servers.

### IP ROUTER SYSTEM

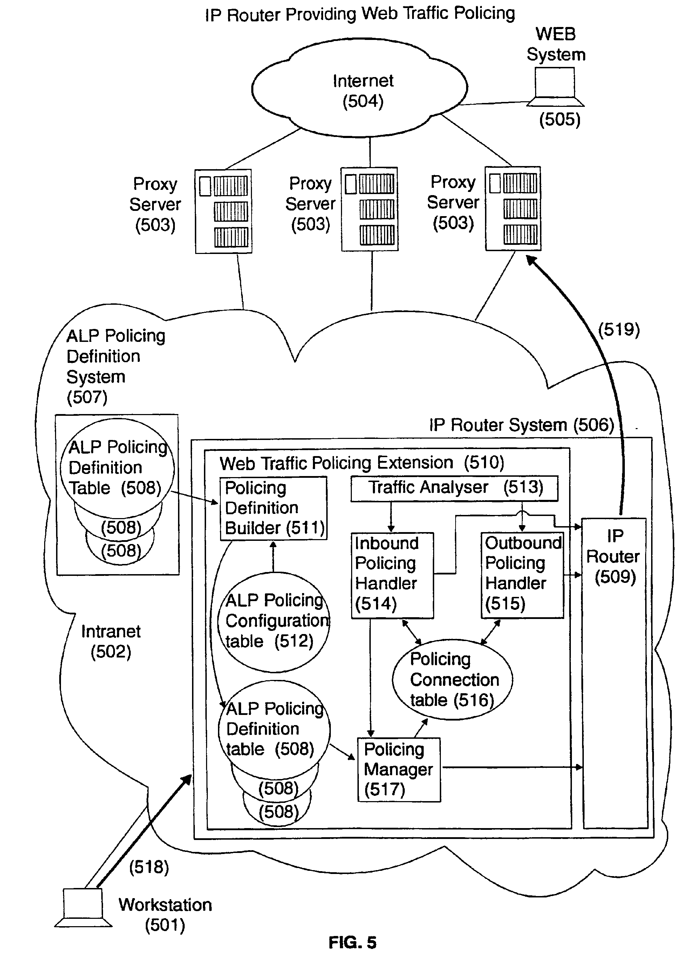

The present invention relates to a system and method for policing the WEB traffic within the Intranet. Figure 5 is a view of a particular embodiment of the system used for policing the WEB traffic according to the present invention.

An end user workstation (a source device) (501) comprising a Web Browser is connected to the Intranet (502). Multiple Proxy Servers (503) are available to access the WEB System (505) connected to the Internet (504). According to the present invention, a system called ALP (Application Level Protocol) Policing Definition system (507) and located within the Intranet network is defined. This ALP Policing Definition system comprises tables called ALP Policing Definition tables (508). An ALP Policing Definition table is configured for each ALP traffic that needs to be policed within the Intranet. Typically, one table is configured for each major WEB Application Level Protocols (such as HTTP, FTP, and Socks). The ALP Policing Definition table defined for each specific ALP, comprises information concerning the WEB traffic policy for said ALP. In particular, each ALP Policing Definition table contains the list of authorized Servers that must be used as destination of the IP Datagrams transporting data using said ALP. For instance, the ALP Policing Definition table configured for HTTP comprises information concerning the list of HTTP Proxy Servers that must be used by workstations (source devices) within the Intranet to access Web Systems located on the Internet.

Two mirrored ALP Policing Definition systems can possibly be used in order to provide a backup to the ALP Policing Definition tables (using for instance a Dispatcher system in front of the two systems).

An IP Router system (506) within the Intranet is in charge of routing IP Datagrams. According to the present invention, said IP Router system is also in charge of policing the WEB traffic. It comprises:
- an IP Routing component (509) for routing any IP Datagram within the Intranet. This IP Router component can be any existing IP Router.
- a Web Traffic Policing Extension component (510).

### WEB TRAFFIC POLICING EXTENSION

The WEB Traffic Policing Extension provides a method for policing the WEB traffic, within the IP Router system. The WEB Traffic Policing Extension is configured with an ALP Policing Configuration table (512), said table comprising information concerning the ALP Policing Definition tables (508).

Once it is started, the WEB Traffic Policing Extension immediately starts a Policing Definition Builder component.
- (511) The ***Policing Definition Builder*** component uses the ALP Policing Configuration table (512) to retrieve the ALP Policing Definition tables (508) from the ALP Policing Definition system (507), and stores a local copy (508) of said tables within the IP Router system.

When the IP Router System (506) receives (518) an IP Datagram from an end user workstation (501), this IP Datagram is forwarded to the WEB Traffic Policing Extension (510). The IP Datagram is then forwarded in sequence to a plurality of other components to perform the method according to the present invention:
- (513) *a **Traffic Analyser*** component analyses the IP Datagram and determines if said IP Datagram is originated from a source device (a workstation) or from a server (a Proxy Server).
- (514) an ***Inbound Policing Handler*** component handles each IP Datagram originated by a source device. The Inbound Policing Handler:
   - determines if said IP Datagram must be updated, based on a Policing Connection table (516) and based on the Source IP address, Source Port, Destination IP address, and Destination Port fields of said IP Datagram, and
   - if said IP Datagram must be updated, updates the Destination IP Address and the Destination Port fields of said IP Datagram using information retrieved from said Policing Connection table (516).
- (515) an ***Outbound Policing Handler*** component handles each IP Datagram originated by a server. The Outbound Policing Handler:
   - determines if said IP Datagram must be updated, based on a Policing Connection table (516) and based on the Source IP address, Source Port, Destination IP address, and Destination Port fields of said IP Datagram, and
   - if said IP Datagram must be updated, updates the Source IP Address and the Source Port fields of said IP Datagram using information retrieved from said Policing Connection table (516).
- (517) a ***Policing Manager*** component handles each IP Datagram originated by a source device. The Policing Manager:
   - determines the ALP (Application Level Protocol) of the data comprised within said IP Datagram using the Destination Port field of said IP Datagram,
   - retrieves the policy information for said IP Datagram from the ALP Policing Definition table (508) (defined for the ALP of the data comprised in said IP Datagram) using the Source IP address, Source Port, Destination IP address, and Destination Port fields of said IP Datagram.
   - If required by said policy information:
      - discards said IP Datagram,
      - builds the Policing Connection table (516) with the characteristics of the IP Datagram and with said policy information.
      - updates the Destination IP Address and the Destination Port fields of said IP Datagram using said policy information.

The WEB Traffic Policing Extension finally forwards the IP Datagram to the IP Router (509) component within the IP Router System. This IP Router component routes (519) the IP Datagram towards its destination. The invention is independent of the IP Router component and does not rely on the way the IP Datagram is handled and routed by this IP Router component.

The WEB Traffic Policing Extension can be enabled or disabled on the IP Router system, by means for instance of a configuration parameter on said IP Router system. Typically, the WEB Traffic Policing Extension:
- is enabled on access IP Router systems at the edge of the Intranet.
- is disabled on the IP Router systems located within the Intranet backbone.

### WEB TRAFFIC POLICING EXTENSION TABLES

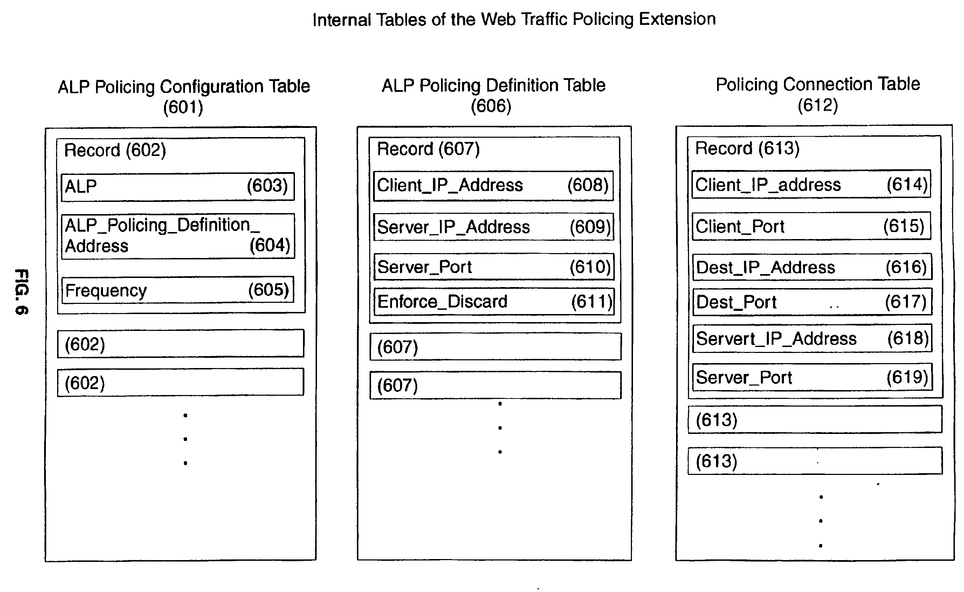

Figure 6 depicts the different tables used by the various components comprised within the WEB Traffic Policing Extension.

The WEB Traffic Policing Extension uses configuration tables (508) comprising WEB traffic policy information. There is one configuration table (508) for each ALP traffic that needs to be policed within the Intranet. Typically, one table is configured for each major WEB Application Level Protocol (such as HTTP, FTP, and Socks). Each configuration table is created (for instance by a Network Administrator) and stored within the ALP Policing Definition system (507) before starting the WEB Policing Traffic Extension. The WEB Policing Traffic Extension then retrieves and receives each ALP Policing Definition table from said ALP Policing Definition system (507).
- (606) ***ALP Policing Definition table.*** There is one table for each ALP traffic that needs to be policed by the WEB Traffic Policing Extension. Each table comprises for each source device (typically a workstation) within the Intranet or for each group of source devices (typically a group of workstations):
   - the address of the Server that should be used as destination of the IP Datagrams originated from said source device (or group of source devices) and comprising data using said ALP, and
   - an indication for discarding said IP Datagrams.

The WEB Traffic Policing Extension also uses a configuration table (512) comprising information concerning each ALP Policing Definition table. This configuration table is created (for instance by a Network Administrator) before the WEB Policing Traffic Extension is started.
- (601) ***ALP Policing Configuration table.*** This table comprises for each Application Level Protocol:
   - the address of the associated ALP Policing Definition table which comprises policing information for said ALP, and
   - the frequency for retrieving said ALP Policing Definition table.

The other table is dynamically built and used by the WEB Traffic Policing Extension for internal purpose:
- (612) ***Policing* Connection *table.*** This table comprises for each source device originating the WEB traffic policed by the WEB Traffic Policing Extension:
   - the destination Server used in the IP Datagrams originated from said source device, and
   - the destination Server which is used as enforced destination of said policed traffic.
These three tables are detailed in Figure 6.

### ALP POLICING CONFIGURATION TABLE

The ALP Policing Configuration table (601) (a flat file in a preferred embodiment) is created by the Network Administrator in charge of the Intranet. This table associates each Application Level Protocol with the address of the ALP Policing Definition table which comprises policy information for said ALP traffic, and the frequency for retrieving said ALP Policing Definition table. The table comprises a list of records (602), each record comprising the following information:
- (603) ***ALP (Application Level Protocol).*** There is one value for each Application Level protocol that needs to be policed by the WEB Traffic Policing Extension. Typically, one record is defined for each of the main Web protocols including HTTP, FTP, and Socks.
- (604) ***ALP_Policing_Definition_Address.*** This is the address of the ALP Policing Definition table defined for each ALP (603), and which is located on the ALP Policing Definition system (507). This information is used by the WEB Traffic Policing Extension to retrieve the ALP Policing Definition table (508) from the ALP Policing Definition system (507).
- (605) ***Frequency.*** The WEB Traffic Policing Extension waits a given period of time before retrieving a new version of the ALP Policing Definition table from the ALP Policing Definition system. The Frequency is used by the WEB Traffic Policing Extension to periodically update the local copy of the ALP Policing Definition table.

### ALP POLICING DEFINITION TABLE

Each ALP Policing Configuration table (606) (a flat file in a preferred embodiment) is created by the Network Administrator in charge of the Intranet. There is one table for each ALP traffic that needs to be policed by the WEB Traffic Policing Extension. Each table associates each source device (typically a workstation) or group of source devices within the Intranet, with:
- the address of the Server that should be used as the destination of IP Datagrams
   - originated from said source device (or group of source devices) and
   - comprising data using said ALP,
- an indication for discarding said IP Datagrams.
The table contains a list of records (607), each record comprising the following information:
- (608) ***Client_IP_Address.*** This is the IP address of a source device (typically a workstation) within the Intranet, or a range of IP addresses associated to a group of source devices within the Intranet (for instance all workstations located at a specific site). Typically, one record (607) is defined for each source device (or group of source devices) at the origin of the traffic the Network Administrator wants to police.
- (609) ***Server_IP_Address.*** This is the IP address of the Server system which must be used by the source device (608) (or group of source devices) for the ALP traffic it originates. The Server_IP_Address should be the destination IP address (311) of the IP Datagrams:
   - sent by the source device (608), and
   - comprising TCP data (306) using the Application Level protocol associated with the table (606) (one table is defined for each ALP).
   For instance, the ALP Policing Definition table configured for HTTP comprises the list of HTTP Proxy Servers that must be used by the workstations within the Intranet to access Web Systems located on the Internet. The Server_IP_Address is then the IP address of the HTTP Proxy Server that should use the workstation (608).
- (610) ***Server_Port.*** This is the Port number identifying the program (application) running on the Server system identified by the Server_IP_Address (609), and which must be used to process the ALP traffic. Server_Port is the Port number that should be used as destination Port (313) for IP Datagrams:
   - sent by the source device (608), and
   - comprising TCP data (306) using the Application Level protocol associated to the table (606) (one table is defined for each ALP).
   For instance, the ALP Policing Definition table configured for HTTP comprises the list of HTTP Proxy Servers that should be used by the workstations within the Intranet to access Web Systems located on the Internet. The Server_Port is then the Port number (for instance 80) of the program running on the HTTP Proxy Servers to handle HTTP traffic. This Port number should then be used by the workstation (608) as destination port for HTTP traffic sent to the HTTP Proxy Server identified by Server_IP_Address (609).
- (611) ***Enforce_Discard.*** This is an indication for discarding IP Datagrams originated by the source device (608). The value of Enforce_Discard indication can be "Yes" or "No":
   - "Yes" means that the IP Datagram which destination is not the Server system (609) must be discarded by the WEB Traffic Policing Extension.
   - "No" means that the IP Datagram which destination is not the Server system (609) must not be discarded by the WEB Traffic Policing Extension.
The table comprises a default record for all source devices which are not explicitly defined in a specific record (607).

### POLICING CONNECTION TABLE

The Policing Connection table (612) is an internal table built by the Policing Manager component and used by the Inbound Policing Handler and the Outbound Policing Handler components. This table is used to store for each source device which originates WEB traffic policed by the WEB Traffic Policing Extension:
- the destination Server used by the IP Datagrams originated from said source device, and
- the destination Server used as enforced destination for said policed traffic.
The table contains a list of records (613), each record providing the following information:
- (614) ***Client_IP_Address.*** This is the IP address of the source device which originates traffic to police. Client_IP_Address contains the value of the Source IP address field (310) of IP Datagrams belonging to said traffic.
- (615) ***Client_Port.*** This is the number of the Port identifying the program (the application) running on the source device originating the traffic to police (this application is called the "source application") . Client_Port comprises the value of the Source Port field (312) of IP Datagrams belonging to said traffic.
   Typically, there is one record (613) for each system within the Intranet originating WEB traffic to police. Each system is identified in a unique way by means of a source device (identified by Client_IP_Address (614)) and a source application (identified by Client_Port (615)). Each record (613) is then identified in a unique way by its Client_IP_Address (614) and its Client_Port (615).
- (616) ***Dest_IP_Address.*** This is the IP address of the Server system, destination of the IP Datagrams originated by the source application identified by Client_Port (615) and running on the source device identified by Client_IP_Address (614). Dest_IP_Address contains the value of the Destination IP address field (311) of said IP Datagrams.
- (617) ***Dest_Port.*** This is the number of the Port identifying the program (the application) running on the Server system (616), destination of the IP Datagrams originated by the source application identified by Client_Port (615) and running on the source device identified by Client_IP_Address (614).
   Dest_Port contains the value of the Destination Port field (313) of said IP Datagrams.
- (618) ***Server_IP_Address.*** This is the IP address of the Server system that must be the destination of the IP Datagrams originated by the source application identified by Client_Port (615) running on the source device identified by Client_IP_Address (614). Server_IP_Address is determined by the Policing Manager component using the ALP Policing Definition tables.
- (619) ***Server_Port.*** This is the number of the Port identifying the program (the application) running on the server system (616) that *must* be the destination of the IP Datagrams originated by the source application identified by Client_Port (615) running on the source device identified by Client_IP_Address (614). Server_Port is determined by the Policing Manager component using the ALP Policing Definition tables.

### POLICING DEFINITION BUILDER

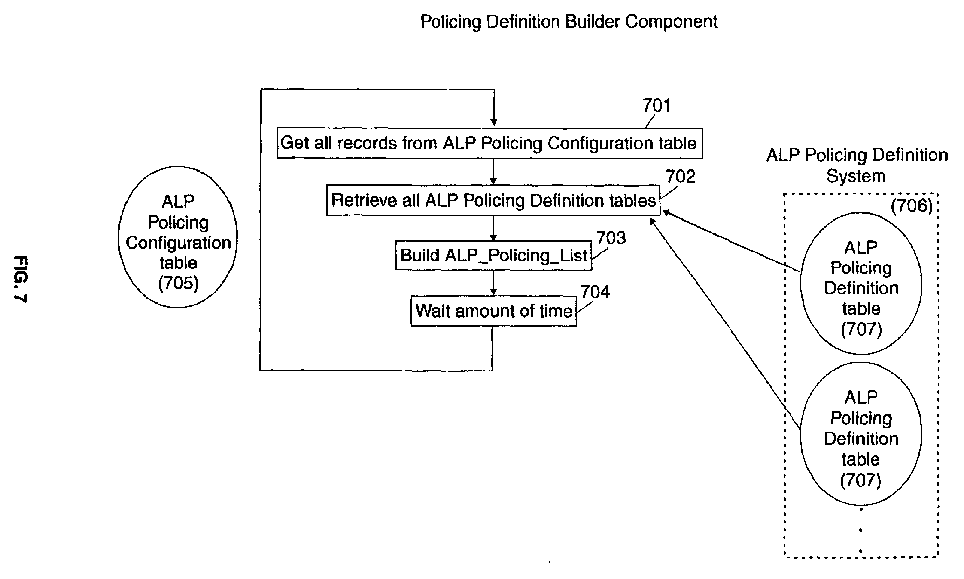

The Policing Definition Builder component of the WEB Traffic Policing Extension is preferably a computer program running on the IP Router System.
This component is in charge of:
- retrieving the ALP Policing Definition tables (606) from the ALP Policing Definition system (507), using the ALP Policing Configuration table (601)
- storing a local copy (508) of said tables within the IP Router system.
The Policing Definition Builder component immediately starts when the WEB Traffic Policing Extension starts. Figure 7 is a flow chart which refers to the internal logic of the Policing Definition Builder component. This component:
- (701) retrieves all records from the ALP Policing Configuration table (601, 705).
- (702) for each record (ALP) (603) in the ALP Policing Configuration table (705):
   - retrieves the ALP Policing Definition table (707) associated with the ALP (603) from the ALP Policing Definition system (706). Said table is retrieved using the ALP_Policing_Definition_Address (604). Said table will be used by the WEB Traffic Policing Extension to police the traffic associated with said ALP (603). Preferably, the HTTP (or FTP) protocol is used to retrieve said table (the ALP_Policing_Definition_Address is used as URL). Encrypted protocols (such as Secure HTTP) can also be used.
   - stores a local copy (508) of said retrieved ALP Policing Definition table within the network device where the WEB Traffic Policing Extension is running.
- (703) builds a list (ALP_Policing_List) with the Application Level protocols recorded in the ALP Policing Configuration table (705). Since there is one record (603) per ALP traffic which must be policed, ALP_Policing_List comprises the list of all ALPS (for instance HTTP, FTP, Socks) which must be policed by the WEB Traffic Policing Extension.
- (704) waits for some amount of time, before looping back to (701) to retrieve again the ALP Policing Definition tables (707). This amount of time is deducted from the Frequency field (605) within the ALP Policing Configuration table (601). For instance, a Frequency (605) of 30 minutes in the record (602) defined for HTTP (603) indicates that the ALP Policing Definition table defined for HTTP will be retrieved every 30 minutes from the ALP Policing Definition system. This mechanism enables the Policing Definition Builder (hence the WEB Traffic Policing Extension) to periodically retrieve and store updates of the ALP Policing Definition tables.
Possibly, the ALP Policing Definition system (706) can register the Policing Definition Builder in order to automatically send it updates of the ALP Policing Definition tables.

### TRAFFIC ANALYSER

The Traffic Analyser component of the WEB Traffic Policing Extension is preferably a computer program running on the IP Router System. This component is in charge of:
- determining if each received IP Datagram is originated from a source device (typically a workstation) or from a server system (typically a Proxy Server).

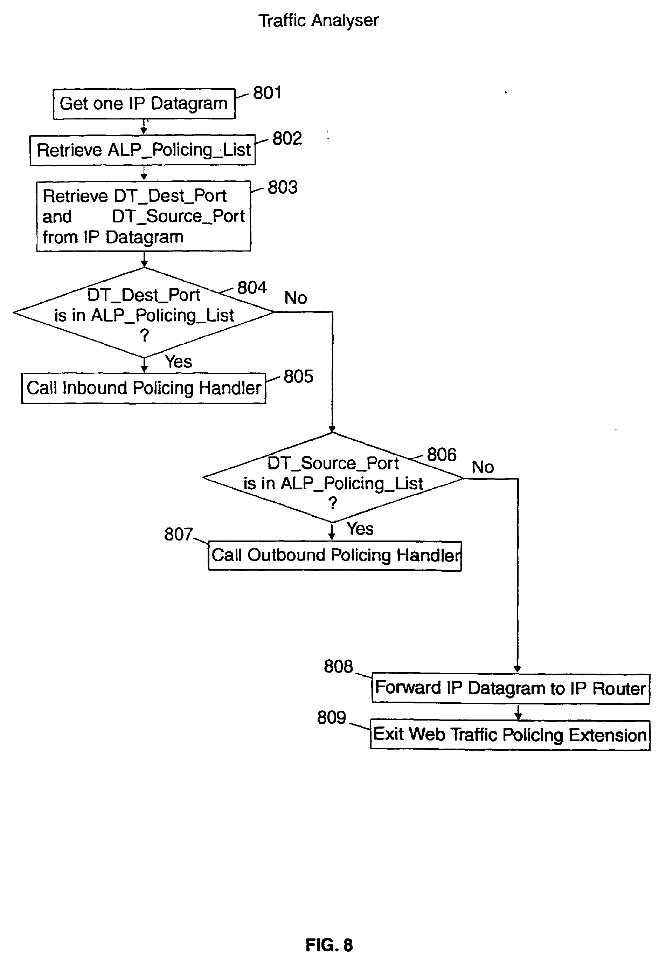

Figure 8 is a flow chart which refers to the internal logic of the Traffic Analyser component. This component:
- (801) retrieves an IP Datagram (the incoming IP Datagram).
- (802) gets ALP_Policing_List from the Policing Definition Builder. ALP_Policing_List comprises the list of all ALPS (for instance HTTP, FTP, Socks) which must be policed by the WEB Traffic Policing Extension.
- (803) retrieves from the IP Datagram, information related to the ALP used by the data (303) comprised within said IP Datagram.
   - DT_Dest_Port = Destination Port field (313) (in TCP Header (305) of said IP Datagram)
   - DT_Source_Port = Source Port field (312) (in TCP Header (305) of said IP Datagram)
- (804) tests whether or not the IP Datagram is originated from a source device and comprises data that uses an ALP which must be policed. If DT_Dest_Port is listed in ALP_Policing_List, then the IP Datagram is originated from a source device and comprises data (303) that uses an ALP traffic which must be policed.
   - If DT_Dest_Port is listed in ALP_Policing_List
      - (805) calls Inbound Policing Handler
   - If DT_Dest_Port is not listed in ALP_Policing_List
      - (806) tests whether or not the IP Datagram is originated from a Server system and comprises data that uses an ALP which must be policed.
      If DT_Source_Port is listed in ALP_Policing_List, then the IP Datagram is originated from a Server system and comprises data (303) that uses an ALP traffic which must be policed.
   - If DT_Source_Port is listed in ALP_Policing_List
      - (807) calls Outbound Policing Handler
   - If DT_Source_Port is not listed in ALP_Policing_List Then the IP Datagram does not comprise data which uses an ALP that must be policed.
      - (808) forwards the IP Datagram to the IP Router component
      - (809) exits the WEB Traffic Policing Extension, and waits for the next IP Datagram.

### INBOUND POLICING HANDLER

The Inbound Policing Handler component of the WEB Traffic Policing Extension is preferably a computer program running on the IP Router System. This component handles each IP Datagram originated by a source device, and is in charge of :
- determining if said IP Datagram must be updated, based on a Policing Connection table (612) and based on the Source IP address, Source Port, Destination IP address, and Destination Port fields of said IP Datagram, and
- if said IP Datagram must be updated, updating the Destination IP Address and the Destination Port fields of said IP Datagram using information retrieved from said Policing Connection table (612).

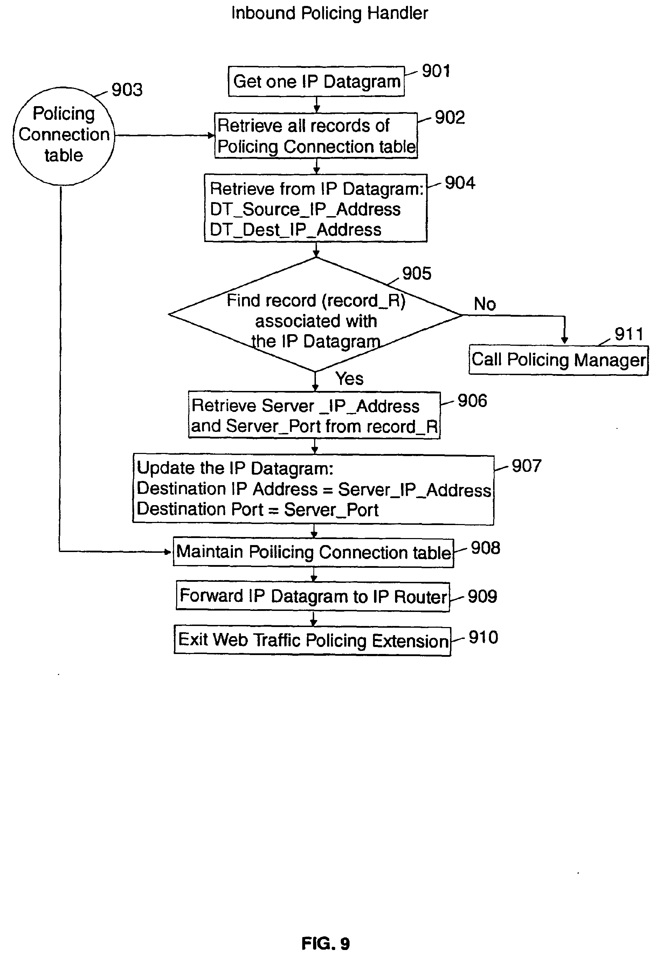

Figure 9 is a flow chart which refers to the internal logic of the Inbound Policing Handler component. This component:
- (901) retrieves one IP Datagram
- (902) retrieves all records of the Policing Connection table (903)
- (904) retrieves from the IP Datagram, information indicating the source and the destination of said IP Datagram:
   - DT_Source_IP_Address = Source IP Address (310) (in IP Header (302) of said IP Datagram)
   - DT_Dest_IP_Address = Destination IP Address field (311) (in IP Header (302) of said IP Datagram)
- (905) finds in the Policing Connection table (903) a record (613) identified by (four conditions):
   - Client_IP_Address (614) = DT_Source_IP_Address
   - Client_Port (615) = DT_Source_Port
   - Dest_IP_Address (616) = DT_Dest_IP_Address
   - Dest_Port (617) = DT_Dest_Port
- If there is no record satisfying said four conditions: Then the IP Datagram belongs to a connection which is not yet defined within the Policing Connection table.
   - (911) calls the Policing Manager component.
- If there is a record (called "record_R") satisfying said four conditions:
   Then the IP Datagram belongs to a connection which is already defined within the Policing Connection table.
- (906) retrieves from "record_R" the information indicating which Server system is the destination Server system of the IP Datagram:
   - Server_IP_Address (618)
   - Server_Port (619).
- (907) updates the IP Datagram with information identifying said destination Server system:
   - Destination IP address field (311) in IP Header (302) = Server_IP_Address (618)
   - Destination Port field (313) in TCP Header (305) = Server_Port (619)
   This enforces the IP Datagram to be sent to the destination server system (618) which is defined in the WEB traffic policy. The values of checksum fields comprised in the IP Datagram (for instance the Header Checksum in the IP Header) are updated accordingly.
- (908) maintains the Policing Connection table (908) and in particular removes from the Policing Connection table (908) records belonging to closed connections. Closed connections are detected for instance using the FIN and ACK indications in the TCP Header. Optionally, a connection is considered closed after a certain period of time without IP Datagram on that connection (this timer value can be for instance a configuration parameter of the WEB Traffic Policing Extension). Any other existing algorithm to detect closed or half closed (for instance when one extremity of the connection has abnormally terminated) TCP connections can also be used to remove such connections from the table.
- (909) forwards the updated IP Datagram to the IP Router component. The updated IP Datagram is then sent to the Server system defined in the WEB traffic policy.
- (910) exits the WEB Traffic Policing Extension, and waits for the next IP Datagram.

### POLICING MANAGER

The Policing Manager component of the WEB Traffic Policing Extension is preferably a computer program running on the IP Router System. This component handles each IP Datagram originated by a source device. It is in charge of:
- determining the ALP (Application Level Protocol) of the data comprised within said IP Datagram using the Destination Port field of said IP Datagram,
- retrieving some policy information related to said IP Datagram from the ALP Policing Definition table (508) defined for the ALP of the data comprised in said IP Datagram, using the Source IP address, Source Port, Destination IP address, and Destination Port fields of said IP Datagram.
- If required by said policy information:
   - discarding said IP Datagram,
   - building the Policing Connection table (612) with the characteristics of the IP Datagram and with said policy information.
   - updating the Destination IP Address and the Destination Port fields of said IP Datagram using said policy information.

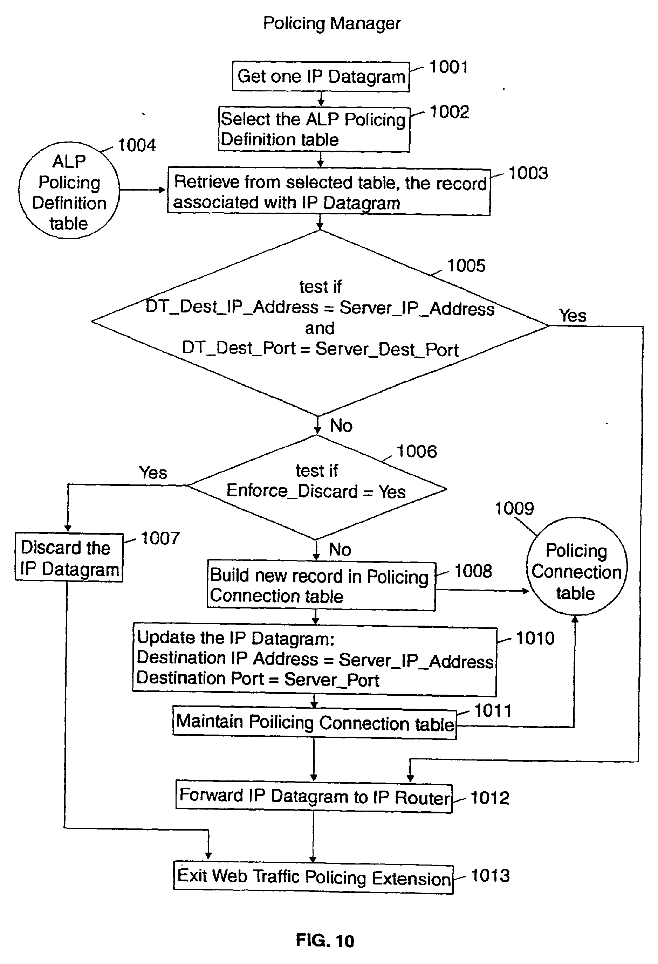

Figure 10 is a flow chart which refers to the internal logic of the Policing Manager component. This component:
- (1001) retrieves one IP Datagram.
- (1002) selects the ALP Policing Definition table, which must be used for policing the IP Datagram. Said table is associated with the ALP used by the data comprised within the IP Datagram. Said ALP is equal to the DT_Dest_Port. For instance, if the IP Datagram comprises data using HTTP, then the selected table is the ALP Policing Definition table associated with the HTTP protocol.
- (1003) retrieves from said selected ALP Policing Definition table (1004), the record (called "record_P") associated with the IP Datagram. Said record is identified by:
   - Client_IP_Address (608) = DT_Source_IP_Address (Client_IP_Address is a specific IP Address identifying one source device), or
   - Client_IP_Address (608) comprises DT_Source_IP_Address (Client_IP_Address is an IP Address range identifying one group of source devices),
- (1005) tests whether the IP Datagram must be policed. The IP Datagram must be policed when the destination system is not the Server system which should be used. The test uses some policy information retrieved from "record_P". If (both conditions):
   - DT_Dest_IP_Address = Server_IP_Address (609), and
   - DT_Dest_Port = Server_Port (610)
   then the destination of the IP Datagram is the Server system which must be used, and therefore the IP Datagram does not need to be policed. Otherwise, the IP Datagram must be policed.
- If the IP Datagram does not need to be policed:
   - (1012) forwards the IP Datagram to the IP Router component. The IP Datagram will then be sent to the Server system which has been correctly set by the source device. No WEB traffic policy is enforced.
   - (1013) exits the WEB Traffic Policing Extension, and waits for the next IP Datagram.
- If the IP Datagram must be policed:
   - (1006) tests whether or not the IP Datagram must be discarded. The IP Datagram must be discarded if Enforce_Discard (611) = "Yes" in "record_P".
   - If the IP Datagram must be discarded:
      - (1007): discards the IP Datagram
      - (1013) exits the WEB Traffic Policing Extension, and waits for the next IP Datagram.
   - If the IP Datagram must not be discarded:
      - (1008) creates a new record (613) in the Policing Connection table (1009) for the connection of the IP Datagram:
         - Client_IP_Address = DT_Source_IP_Address
         - Client_Port_Address = DT_Port_Address
         - Dest_IP_Address = DT_Dest_IP_Address
         - Dest_Port = DT_Dest_Port
         - Server_IP_Address = Server_IP_Address (609) (from "record_P")
         - Server_Port = Server_Port (610) (from "record_P") .
      - (1010) updates the IP Datagram with information identifying the destination Server system that must be used:
         - Destination IP address field (311) in IP Header (302) = Server_IP_Address (609)
         - Destination Port field (313) in TCP Header (305) = Server_Port (610)
         This enforces the IP Datagram to be sent to the destination Server system (609) defined in the WEB traffic policy. The values of checksum fields comprised in the IP Datagram (for instance the Header Checksum in the IP Header) are updated accordingly.
      - (1011) maintains the Policing Connection table (908) and in particular removes from the Policing Connection table (908) records belonging to closed connections. Closed connections are detected for instance using the FIN and ACK indications in the TCP Header. Optionally, a connection is considered closed after a certain period of time without IP Datagram on that connection (this timer value can be for instance a configuration parameter of the WEB Traffic Policing Extension). Any other existing algorithm to detect closed or half closed (for instance when one extremity of the connection has abnormally terminated) TCP connections can also be used to remove such connections from the table.
      - (1012) forwards the updated IP Datagram to the IP Router component. The updated IP Datagram is then sent to the Server system defined in the WEB traffic policy.
      - (1013) exits the WEB Traffic Policing Extension, and waits for the next IP Datagram.

### OUTBOUND POLICING HANDLER

The Outbound Policing Handler component of the WEB Traffic Policing Extension is preferably a computer program running on the IP Router System. This component handles each IP Datagram originated by a Server system. It is in charge of
- determining if said IP Datagram must be updated, based on a Policing Connection table (612) and based on the Source IP address, Source Port, Destination IP address, and Destination Port fields of said IP Datagram, and
- if said IP Datagram must be updated, updating the Source IP Address and the Source Port fields of said IP Datagram using information retrieved from said Policing Connection table (612).

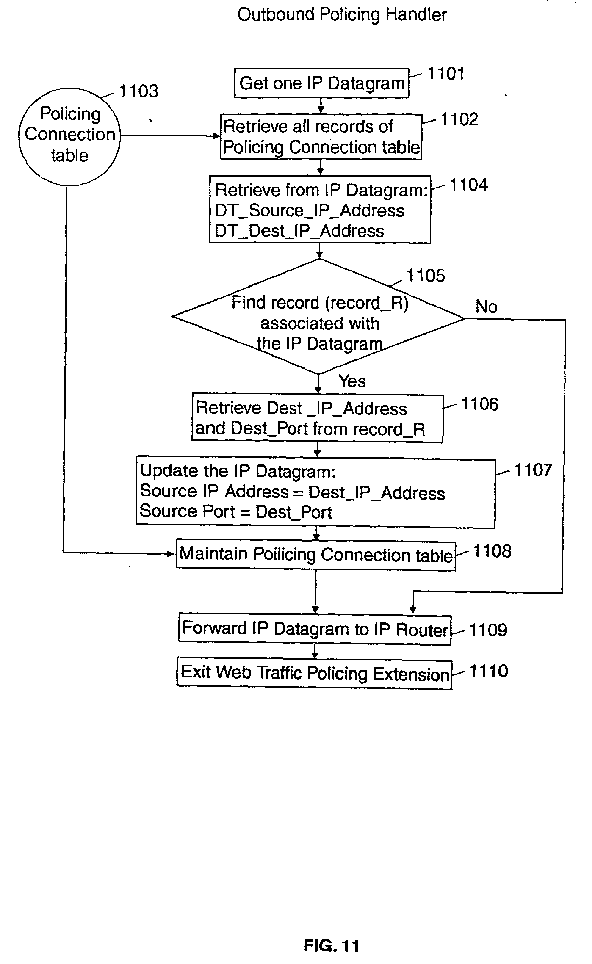

Figure 11 is a flow chart which refers to the internal logic of the Outbound Policing Handler component. This component:
- (1101) retrieves one IP Datagram.
- (1102) retrieves all records of the Policing Connection table (1103)
- (1104) retrieves from the IP Datagram, information indicating the source and the destination of said IP Datagram:
   - DT_Source_IP_Address = Source IP Address (310) (in IP Header (302) of said IP Datagram)
   - DT_Dest_IP_Address = Destination IP Address field (311) (in IP Header (302) of said IP Datagram)
- (1105) finds in the Policing Connection table (1103) one record (613) identified by (four conditions):
   - Client_IP_Address (614) = DT_Dest_IP_Address
   - Client_Port (615) = DT_Dest_Port
   - Server_IP_Address (618) = DT_Source_IP_Address
   - Server_Port (619) = DT_Source_Port
- If there is no record satisfying said four conditions, then the IP Datagram belongs to a connection which is not defined within the Policing Connection table. There is therefore no WEB traffic policing required for the IP Datagram.
   - (1109) forwards the IP Datagram to the IP Router component.
   - (1110) exits the WEB Traffic Policing Extension, and waits for the next IP Datagram.
- If there is a record (called record_R") satisfying said four conditions, then the IP Datagram belongs to a connection which is already defined within the Policing Connection table.
- (1106) retrieves from "record_R" information indicating the destination system of the IP Datagram originated from the source device:
   - Dest_IP_Address (616)
   - Dest_Port (617)
- (1107) updates the IP Datagram with information identifying said destination system:
   - Source IP address field (310) in IP Header (302) = Dest_IP_Address (616).
   - Source Port field (312) in TCP Header (305) = Dest_Port (617).
   This way, the IP Datagram appears as being sent by the system (616) which is destination of the IP Datagrams originated by the source device (614). The values of checksum fields comprised in the IP Datagram (for instance the Header Checksum in the IP Header) are updated accordingly.
- (1108) maintains the Policing Connection table (1103) and in particular removes from the Policing Connection table (908) records associated with closed connections. Closed connections are detected for instance using the FIN and ACK indications in the TCP Header. Optionally, a connection is considered closed after a certain period of time without IP Datagram on that connection (this timer value can be for instance a configuration parameter of the WEB Traffic Policing Extension). Any other existing algorithm to detect closed or half closed (for instance when one extremity of the connection has abnormally terminated) TCP connections can also be used to remove such connections from the table.
- (1109) forwards the updated IP Datagram to the IP Router. The updated IP Datagram is then sent to the server system which has been defined in the WEB traffic policy.
- (1110) exits the WEB Traffic Policing Extension, and waits for the next IP Datagram.

### ADVANTAGES

The present inventions provides the following advantages :
- The WEB traffic policy is defined at one central location (the ALP Policing Definition system), and does not have to be configured on multiple network devices or workstations.
- Updates related to the WEB traffic policy can be periodically retrieved by network devices comprising the WEB Traffic Policing Extension. For instance, a new Proxy Server may be setup for a group of source devices in order to provide a better WEB access service. Because it periodically retrieves the WEB traffic policy updates, the WEB Traffic Policing Extension is then able to enforce towards said new Proxy Server the traffic originated by said group of source devices.
- Updates of the WEB traffic policy can be automatically received by network devices comprising the WEB Traffic Policing Extension. For instance, a new Proxy Server may be set-up for a group of source devices in order to provide a better WEB access service. Because it automatically receives the WEB traffic policy updates, the WEB Traffic Policing Extension is then able to enforce towards said new Proxy Server the traffic originated by said group of source devices.
- The WEB traffic policy enforces WEB traffic originated by end user workstations to use predefined servers within the Intranet even when the end user workstations are not correctly configured. Since the WEB traffic policing is done within the Intranet (by the WEB Traffic Policing Extension), an error in the configuration of an end user workstation can be corrected. For instance, a workstation located in Toulouse (France) may be configured to send HTTP traffic to an HTTP Proxy Server located in Paris. The WEB Traffic Policing Extension can direct said traffic to a closer HTTP Proxy Server (for instance an HTTP Proxy Server located in Toulouse).
- The network resources within the Intranet are optimized. For instance, the specifications and therefore the cost of Proxy Servers is related to the number of source devices which will access it. A Proxy Server which will be accessed by 500 source devices will be smaller and therefore cheaper than a Proxy Server which will be accessed by 10000 source devices.
- The performance of the WEB access service is improved. For instance, when a Proxy Server is set-up in France, it is configured to provide WEB access service to a specified number of source devices in France. When more source devices (for instance source devices located in Belgium) than expected are accessing said Proxy Server, the performance of said Proxy server may be degraded with an impact on the performance of the WEB access service. The WEB traffic policy ensures that the servers are not accessed by unexpected source devices.
- The utilization of network resources is optimized. In particular, bandwidth within the Intranet is saved. For instance, when a source device located in France wants to access a WEB system through a Proxy Server, said source device will use a Proxy server located in France instead of any other Proxy Server (for instance a Proxy Server located in Japan). The path within the Intranet to reach the Proxy Server is minimized (the utilization of network resources and the required bandwidth between France and Japan are also minimized) .
- There is no impact nor dependency on the end user workstation. No specific software is required on end user workstations.
In particular the present invention is not limited to WEB traffic handled by Proxy Servers, but relates to any IP traffic (Socks, FTP, HTTP,...) handled by any Server in the Intranet (Socks Servers, FTP Servers, WEB Servers,...).

## Claims

1. A method, in a network device, of enforcing the dispatching of Internet Protocol (IP) datagrams on a plurality of servers (503) according to a defined policy, each IP datagram being sent from a source port on a source device to a destination port on a destination device in an Intranet network (502) comprising a plurality of servers (503) and at least one client (501), said method comprising the steps of:
• determining (804, 806) whether the source device of an incoming IP datagram is a client (501) or a server (503); the IP datagram transporting data using an application level protocol;
If (805) the source device of the IP datagram is a client (501):
• identifying (803, 904):
• client address (310),
• client port (312),
• destination address (311),
• destination port (313),
of the IP Datagram (301);
• searching (906) for a server address and a server port in a first table (612), said first table comprising a server address (618) and a server port (617) for each connection (613) identified by a client address (614), a client port (615), a destination address (616) and a destination port (617);
if (911) the server address and the server port are not identified in said first table (612) for the client address (614), the client port (615), the destination address (616) and the destination port (617),
• identifying (1002) the application level protocol used by data transported in the IP datagram;
• determining (1003) the server address and the server port referring to a second table (606), said second table (606) comprising for the identified application level protocol, a server address (609) and a server port (610) for each client or group of clients identified by a client address (608) or range of client addresses;
if (1005) the destination address (311) and the server address (609) are different or if the destination port (313) and the server port (610) are different:
• creating (1008) a new record in said first table (612) comprising:
• the client address (310, 608, 614) ;
• the client port (311, 615) ;
• the destination address (312, 616) ;
• the destination port (313, 617);
• the server address (609, 618);
• the server port (610, 619);
if the server address and the server port are identified in said first table, and If said server address and the destination address are different or if said server port and the destination port are different:
• replacing (907) the destination address (311) and the destination port (313) in the IP datagram respectively by the server address (618) and the server port (619);
• sending (909) the IP datagram over the IP network (502).

2. A method according to the preceding claim comprising the further steps of:
if the server address and the destination address are identical and if the server port and the destination port are identical:
• maintaining the destination address (311) and the destination port (313) in the IP datagram;
• sending the IP datagram over the IP network (502).

3. The method according to any one of the preceding claims comprising the further steps of:
If (807) the source device of the IP datagram is a server (503):
• identifying (803, 1104):
• the server address (310),
• the server port (312),
• the client address (311),
• the client port (313),
of the IP Datagram (301);
• searching (1106) for a destination address and a destination port in said first table (612), said first table comprising a destination address (616) and a destination port (617) for each connection (613) identified by a server address (618), a server port (619), a client address (614) and a client port (615);
if a destination address and a destination port are identified in said first table, and if the server address and the destination address are different or if the server port and the destination port are different:
• replacing (1107) the server address (310) and the server port (312) in the IP datagram respectively by the destination address (616) and the destination port (617);
• sending (1109) the IP datagram over the IP network (502).

4. A method according to the preceding claim wherein
if a destination address and a destination port are not identified in said first table, or if the server address and the destination address are identical and if the server port and the destination port are identical:
• maintaining the server address (310) and the server port (312) in the IP datagram;
• sending the IP datagram over the IP network (502).

5. The method according to any one of the preceding claims wherein said IP datagram comprises a Source IP Address field (310) and a Destination IP Address field (311) in an IP header (302) for identifying the source device and the destination device, and a Source Port Address field (312) and a Destination Port Address field (313) in a Transmission Control Protocol (TCP) header (305) for identifying the source port and the destination port on said source device and destination device.

6. The method according to any one of the preceding claims wherein the step of determining (804, 806) whether the source device of the incoming IP datagram is a client (501) or a server (503) comprises the further step of:
• determining if the value of the Destination Port field (313) comprised in the IP datagram is equal to the value of a destination port on a server (503) or if the value of the Source Port field (312) comprised in the IP datagram is equal to the value of a source port on a server (503).

7. The method according to any one of the preceding claims wherein the IP datagram transports data using an application level protocol and wherein said step of determining (906) a server address and a server port referring to a first table (612), comprises the further steps of:
if the server address and the server port are not identified in said first table (612) for the client address (614), the client port (615), the destination address (616) and the destination port (617),
• identifying (1002) the application level protocol used by data transported in the IP datagram;
• determining (1003) the server address and the server port referring to a second table (606), said second table (606) comprising for the identified application level protocol, a server address (609) and a server port (610) for each client or group of clients identified by a client address (608) or range of client addresses;
if (1005) the destination address (311) and the server address (609) are different or if the destination port (313) and the server port (610) are different:
• identifying an indication for discarding the IP datagram in said second table (606), said second table (606) comprising for the identified application level protocol, an indication (611) for discarding IP datagrams for each client or group of clients identified by a client address (608) or range of client addresses;
if (1006) the indication (611) for discading the IP datagram is set:
• discarding (1007) the IP datagram;
if the indication (611) for discarding the IP datagram is not set:
• creating (1008) a new record in said first table (612) comprising:
• the client address (310, 608, 614);
• the client port (311, 615);
• the destination address (312, 616);
• the destination port (313, 617);
• the server address (609, 618);
• the server port (610, 619).

8. The method according to any one of the preceding claims comprising the further step of:
• configuring said second table (606), said second table comprising one table for each supported application level protocol.

9. The method according to any one of the preceding claims wherein the step of configuring said second table (606) comprises the step of:
• retrieving (702) a portion or the totality of said second table (606) from one or a plurality of server systems (507) within the IP network (502).

10. The method according to any one of the preceding claims wherein the step of configuring said second table comprises the step of:
• retrieving updates of said second table (606) from said one or plurality of server systems (507) within the network.

11. The method according to any one of the preceding claims wherein the steps of retrieving a portion or the totality of said second table (606) and retrieving updates of said second table (606) comprise the further step of:
• determining address of said one or plurality of server systems (507) storing a portion or the totality of said second table (606) referring to a third table (601).

12. The method according to any one of the preceding claims wherein the step of configuring said second table (606) comprises the step of:
• receiving a portion or the totality of said second table from said one or plurality of server systems (507) within the network.

13. The method according to any one of the preceding claims wherein the step of configuring said second table comprises the step of:
• receiving updates of said second table from said one or plurality of server systems (507) within the network.

14. The method according to any one of the preceding claims wherein the step of configuring said second table comprises the step of:
• locally storing said second table (606) and/or updates of said second table (606) within the network device (506).

15. The method according to any one of the preceding claims wherein said plurality of servers are proxy servers (503).

16. A network device (506), comprising means adapted for carrying out the method according to any one of the preceding claims.

17. A computer readable medium comprising instructions for carrying out the method according to any one of claims 1 to 15.

## Patentansprüche

1. Verfahren in einer Netzwerkeinheit zum Erzwingen der Verteilung von Internetprotokoll(IP)-Datagrammen auf eine Vielzahl von Servern (503) gemäß einer definierten Steuerungsstrategie, wobei jedes IP-Datagramm von einem Quellenanschluss einer Quelleneinheit an einen Zielanschluss einer Zieleinheit in einem Intranet (502) gesendet wird, welches eine Vielzahl von Servern (503) und mindestens einen Client (501) umfasst, wobei das Verfahren die folgenden Schritte umfasst:
• in den Schritten (804, 806) Ermitteln, ob die Quelleneinheit eines ankommenden IP-Datagramms ein Client (501) oder ein Server (503) ist; wobei das IP-Datagramm Daten auf der Basis eines Protokolls der Verarbeitungsschicht enthält;
wenn in Schritt (805) die Quelleneinheit des IP-Datagramms ein Client (501) ist:
• in den Schritten (803, 904)ermitteln:
• der Client-Adresse (310);
• des Client-Anschlusses (312);
• der Zieladresse (311);
• des Zielanschlusses (313);
des IP-Datagramms (301);
• in Schritt (906) Suchen nach einer Server-Adresse und einem Server-Anschluss in einer ersten Tabelle (612), wobei die erste Tabelle eine Server-Adresse (618) und einen Server-Anschluss (617) für jede durch eine Client-Adresse (614), einen Client-Anschluss (615), eine Zieladresse (616) und einen Zielanschluss (617) gekennzeichnete Verbindung (613) umfasst;
wenn in Schritt (911) in der ersten Tabelle (612), welche die Client-Adresse (614), den Client-Anschluss (615), die Zieladresse (616) und den Zielanschluss (617) enthält, die Server-Adresse und der Server-Anschluss nicht gefunden werden,
• in Schritt (1002) Ermitteln des Protokolls der Verarbeitungsschicht, das durch die im IP-Datagramm beförderten Daten benutzt wird;
• in Schritt (1003) Ermitteln der Server-Adresse und des Server-Anschlusses aus einer zweiten Tabelle (606), wobei die zweite Tabelle (606) für das ermittelte Protokoll der Verarbeitungsschicht eine Server-Adresse 8609) und einen Server-Anschluss (610) für jeden durch eine Client-Adresse (608) gekennzeichneten Client oder für jede durch eine Liste von Client-Adressen gekennzeichnete Gruppe von Clients umfasst;
wenn (1005) sich die Zieladresse (311) und die Server-Adresse (609) bzw. der Zielanschluss (313) und der Server-Anschluss (610) voneinander unterschieden:
• in Schritt (1008) Erzeugen eines neuen Datensatzes in der ersten Tabelle (612), welcher Folgendes umfasst:
• die Client-Adresse (310, 608, 614);
• den Client-Anschluss (311, 615);
• die Zieladresse (312, 616);
• den Zielanschluss (313, 617);
• die Server-Adresse (609, 618);
• den Server-Anschluss (610, 619);
wenn die Server-Adresse und der Server-Anschluss in der ersten Tabelle angegeben sind und sich die Server-Adresse und die Zieladresse bzw. der Server-Anschluss und der Zielanschluss voneinander unterscheiden:
• in Schritt (907) Ersetzen der Zieladresse (311) und des Zielanschlusses (313) im IP-Datagramm durch die Server-Adresse (618) bzw. den Server-Anschluss (619);
• in Schritt (909) Senden des IP-Datagramms über das IP-Netzwerk (502).

2. Verfahren nach dem vorangehenden Anspruch, welches ferner die folgenden Schritte umfasst:
Wenn die Server-Adresse und Zieladresse sowie der Server-Anschluss und der Zielanschluss identisch sind:
• Speichern der Ziel-Adresse (311) und des Zielanschlusses (313) im IP-Datagramm;
• Senden des IP-Datagramms über das IP-Netzwerk (502).

3. Verfahren nach einem der vorangehenden Ansprüche, welches ferner die folgenden Schritte umfasst:
Wenn in Schritt (807) die Quelleneinheit des IP-Datagramms ein Server (503) ist:
• in den Schritten (803, 1104) Ermitteln:
• der Server-Adresse (310);
• des Server-Anschlusses (312);
• der Client-Adresse (311);
• des Client-Anschlusses (313);
des IP-Datagramms (301);
• in Schritt (1106) Suchen nach einer Zieladresse und einem Zielanschluss in der ersten Tabelle (612), wobei die erste Tabelle eine Zieladresse (616) und einen Zielanschluss (617) für jede durch eine Server-Adresse (618), einen Server-Anschluss (619), eine Client-Adresse (614) und einen Client-Anschluss (615) gekennzeichnete Verbindung (613) umfasst;
wenn in der ersten Tabelle eine Zieladresse und ein Zielanschluss gefunden werden und wenn sich die Server-Adresse und die Zieladresse bzw. der Server-Anschluss und der Zielanschluss voneinander unterscheiden:
• in Schritt (1107) Ersetzen der Server-Adresse (310) und des Server-Anschlusses (312) im IP-Datagramm durch die Zieladresse (616) bzw. den Zielanschluss (617);
• in Schritt (1109) Senden des IP-Datagramms über das IP-Netzwerk (502).

4. Verfahren nach dem vorangehenden Anspruch, bei welchem,
wenn in der ersten Tabelle keine Zieladresse und kein Zielanschluss gefunden werden oder wenn die Server-Adresse und die Zieladresse identisch und der Server-Anschluss und der Zielanschluss identisch sind, folgende Schritte ausgeführt werden:
• Speichern der Server-Adresse (310) und des Server-Anschlusses (312) im IP-Datagramm;
• Senden des IP-Datagramms über das IP-Netzwerk (502).

5. Verfahren nach einem der vorangehenden Ansprüche, bei welchem das IP-Datagramm ein Feld Quellen-IP-Adresse (310) und ein Feld Ziel-IP-Adresse (311) in IP-Kopfdaten (302) zum Kennzeichnen einer Quelleneinheit und der Zieleinheit sowie ein Feld Quellen-Anschlussadresse (312) und ein Feld Ziel-Anschlussadresse (313) in TCP-Kopfdaten (305) zum Kennzeichnen des Quellenanschlusses und des Zielanschlusses der Quelleneinheit und der Zieleinheit umfasst.

6. Verfahren nach einem der vorangehenden Ansprüche, bei welchem der Schritt des Ermittelns (804, 806), ob die Quelleneinheit des ankommenden IP-Datagramms ein Client (501) oder ein Server (503) ist, ferner den folgenden Schritt umfasst:
• Ermitteln, ob der Wert des im IP-Datagramm enthaltenen Feldes Zielanschluss (313) gleich dem Wert eines Zielanschlusses eines Server (503) oder ob der Wert des im IP-Datagramm enthaltenen Feldes Quellenanschluss (312) gleich dem Wert eines Quellenanschlusses eines Server (503) ist.

7. Verfahren nach einem der vorangehenden Ansprüche, bei welchem das IP-Datagramm Daten mit Hilfe eines Protokolls der Verarbeitungsschicht befördert und bei welchem der Schritt des Ermittelns (906) einer Server-Adresse und eines Server-Anschlusses aus einer ersten Tabelle (612) die folgenden Schritte umfasst:
Wenn in der ersten Tabelle (612), welche die Client-Adresse (614), den Client-Anschluss (615), die Zieladresse (616) und den Zielanschluss (617) enthält, die Server-Adresse und der Server-Anschluss für nicht gefunden werden, Folgendes durchgeführt wird:
• In Schritt (1002) Ermitteln des Protokolls der Verarbeitungsschicht, das durch die im IP-Datagramm beförderten Daten verwendet wird;
• In Schritt (1003) Ermitteln der Server-Adresse und des Server-Anschlusses aus einer zweiten Tabelle (606), wobei die zweite Tabelle (606) für das gefundene Protokoll der Verarbeitungsschicht für jeden durch eine Client-Adresse (608) gekennzeichneten Client oder für jede durch eine Liste von Client-Adressen gekennzeichnete Gruppe von Clients eine Server-Adresse (609) und einen Server-Anschluss (610) umfasst;
wenn (1005) sich die Zieladresse (311) und die Server-Adresse (609) oder der Zielanschluss (313) und der Server-Anschluss (610) voneinander unterscheiden:
• Ermitteln eines Hinweises zum Löschen des IP-Datagramms in der zweiten Tabelle (606), wobei die zweite Tabelle (606) für das ermittelte Protokoll der Verarbeitungsschicht einen Hinweis (611) zum Löschen von IP-Datagrammen für jeden durch eine Client-Adresse (608) gekennzeichneten Client oder jede durch eine Liste von Client-Adressen gekennzeichnete Gruppe von Clients umfasst;
wenn in Schritt (1006) der Hinweis (611) zum Löschen des IP-Datagramms gesetzt ist:
• in Schritt (1007) Löschen des IP-Datagramms;
Wenn der Hinweis (611) zum Löschen des IP-Datagramms nicht gesetzt ist:
• in Schritt (1008) Erzeugen eines neuen Datensatzes in der ersten Tabelle (612), der Folgendes umfasst:
• die Client-Adresse (310, 608, 614);
• den Client-Anschluss (311, 615);
• die Zieladresse (312, 616);
• den Zielanschluss (313, 617);
• die Server-Adresse (609, 618);
• den Server-Anschluss (610, 619).

8. Verfahren nach einem der vorangehenden Ansprüche, welches ferner den folgenden Schritt umfasst:
• Konfigurieren der zweiten Tabelle (606), wobei die zweite Tabelle für jedes unterstützte Protokoll der Verarbeitungsschicht eine Tabelle umfasst.

9. Verfahren nach einem der vorangehenden Ansprüche, bei welchem der Schritt des Konfigurierens der zweiten Tabelle (606) den folgenden Schritt umfasst:
• In Schritt (702) Abrufen eines Teils oder der gesamten zweiten Tabelle (606) von einem oder einer Vielzahl von Server-Systemen (507) innerhalb des IP-Netzwerks (502).

10. Verfahren nach einem der vorangehenden Ansprüche, bei welchem der Schritt des Konfigurierens der zweiten Tabelle den folgenden Schritt umfasst:
• Abrufen von Aktualisierungen der zweiten Tabelle (606) von dem einen oder der Vielzahl von Server-Systemen (507) innerhalb des Netzes.

11. Verfahren nach einem der vorangehenden Ansprüche, bei welchem die Schritte des Abrufens eines Teils oder der gesamten zweiten Tabelle (606) und des Abrufens von Aktualisierungen der zweiten Tabelle (606) den folgenden Schritt umfassen:
• Ermitteln der Adresse eines oder der Vielzahl von Server-Systemen (507), in welchen ein Teil oder die gesamte zweite Tabelle (606) gespeichert ist, aus einer dritten Tabelle (601).

12. Verfahren nach einem der vorangehenden Ansprüche, bei welchem der Schritt des Konfigurierens der zweiten Tabelle (606) den folgenden Schritt umfasst:
• Empfangen eines Teils oder der gesamten zweiten Tabelle von dem einem oder der Vielzahl von Server-Systemen (507) innerhalb des Netzwerks.

13. Verfahren nach einem der vorangehenden Ansprüche, bei welchem der Schritt des Konfigurierens der zweiten Tabelle den folgenden Schritt umfasst:
• Empfangen von Aktualisierungen der zweiten Tabelle von dem einen oder der Vielzahl von Server-Systemen (507) innerhalb des Netzwerks.

14. Verfahren nach einem der vorangehenden Ansprüche, bei welchem der Schritt des Konfigurierens der zweiten Tabelle den folgenden Schritt umfasst:
• Lokales Speichern der zweiten Tabelle (606) und/oder von Aktualisierungen der zweiten Tabelle (606) innerhalb der Netzwerkeinheit (506).

15. Verfahren nach einem der vorangehenden Ansprüche, bei welchem die Vielzahl von Servern Proxyserver (503) sind.

16. Netzwerkeinheit (506), welche Mittel zum Ausführen des Verfahrens gemäß einem der vorangehenden Ansprüche umfasst.

17. Computerlesbares Medium, welches Anweisungen zum Ausführen des Verfahrens gemäß einem der Ansprüche 1 bis 15 umfasst.

## Revendications

1. Un procédé, dans un dispositif de réseau, pour faire appliquer la distribution de datagrammes à Protocole Internet (IP) sur une pluralité de serveurs (503) selon une politique définie, chaque datagramme (IP) étant envoyé depuis un port source sur un dispositif source, vers un port destinataire sur un dispositif destinataire dans un réseau intranet (502), comprenant une pluralité de serveurs (503) et au moins un client (501), ledit procédé comprenant les étapes consistant à :
* déterminer (804, 806) si le dispositif source d'un datagramme IP entrant est un client (501) ou un serveur (503) ; le datagramme IP transportant des données en utilisant un protocole de niveau application ;
si (805) le dispositif source du Datagramme IP est un client (501) :
* identifier (803, 904) :
* une adresse client (310),
* un port client (312),
* un adresse de destination (311),
* un port de destination (313),
du Datagramme IP (301) ;
* rechercher (9060) une adresse de serveur et un port de serveur dans une première table (612), ladite première table comprenant une adresse de serveur (618) et un port de serveur (617) pour chaque connexion (613) identifiée par une adresse client (614), un port client (615), une adresse de destination (616) et un port de destination (617) ;
si (911), l'adresse de serveur et le port de serveur ne sont pas identifiés dans ladite première table (612) pour l'adresse de client (614), le port de client (615), l'adresse de destination (616) et le port de destination (617),
* identifier (1002) le protocole de niveau application utilisé par les données transportées dans le datagramme IP ;
* déterminer (1003) l'adresse de serveur et le port de serveur en se référant à une deuxième table (606), ladite deuxième table (60) comprenant, pour le protocole de niveau d'application identifié, une adresse de serveur (609) et un port de serveur (610) pour chaque client ou groupe de client identifié par une adresse client (608) ou plage d'adresses client.
si (1005) l'adresse de destination (311) et l'adresse de serveur (609) sont différentes, ou si le port de destination (313) et le port de serveur (610) sont différents :
* créer (1008) un nouvel enregistrement dans ladite table (612), comprenant :
* l'adresse de client (310, 608, 614) ;
* le port de client (311, 615) ;
* l'adresse de destination (312, 616) ;
* le port de destination (313, 317) ;
* l'adresse de serveur (609, 618) ;
* le port de serveur (610, 619) ;
si l'adresse de serveur et le port de serveur sont identifiés dans ladite première table et si ladite adresse de serveur et l'adresse de destination sont différentes, ou si ledit port de serveur et ledit port de destination sont différents :
* remplacer (907) l'adresse de destination (311) et le port de destination (313) dans le datagramme IP, respectivement, par l'adresse de serveur (618) et le port de serveur (619).
* envoyer (909) le datagramme IP sur le réseau IP (502).

2. Un procédé selon la revendication précédente, comprenant les autres étapes consistant à :
si l'adresse de serveur et l'adresse de destination sont identiques et si le port de serveur et le port de destination sont identiques :
* maintenir l'adresse de destination (311) et le port de destination (313) dans le datagramme IP ;
* envoyer le datagramme IP sur le réseau IP (502).

3. Le procédé selon l'une quelconque des revendications précédentes, comprenant les étapes supplémentaires consistant à :
si (807) le dispositif source du datagramme IP est un serveur (503) ;
* identifier (803, 1104) :
* l'adresse de serveur (310),
* le port de serveur (312),
* l'adresse de client (311),
* le port de client (313),
du Datagramme IP (301) ;
* rechercher (1106) une adresse de destination et un port de destination dans ladite première table (612), ladite première table comprenant une adresse de destination (616) et un port de destination (617) pour chaque connexion (613) identifiée par une adresse de serveur (618), un port de serveur (619), une adresse de client (614) et un port de client (615) ;
si une adresse de destination et un port de destination sont identifiés dans ladite première table, et si l'adresse de serveur et l'adresse de destination son différents, ou si le port de serveur et le port de destination sont différents :
* remplacer (1107) l'adresse de serveur (310) et le port de serveur (312) dans le datagramme IP, respectivement, par l'adresse de destination (616) et le port de destination (617) ;
* envoyer (1109) le datagramme IP sur le réseau IP (502).

4. Un procédé selon la revendication précédente, dans lequel:
si une adresse de destination et un port de destination ne sont pas identifiés dans ladite première table, ou si l'adresse de serveur et
l'adresse de destination sont identiques et si le port de serveur et le port de destination sont identiques:
* maintenir l'adresse de serveur (310) et le port de serveur (312) dans le datagramme IP.
* envoyer le datagramme IP sur le réseau IP (502).

5. Le procédé selon l'une quelconque des revendications précédentes, dans lequel ledit datagramme IP comprend un champ d'Adresse IP Source (310) et un champ d'Adresse IP de destination (311) dans une en-tête IP (302), pour identifier le dispositif source et le dispositif de destination, et un champ d'adresse de port source (312) et un champ d'adresse de port de destination (313) dans une en-tête (305) de protocole de contrôle de transmission (TCP), pour identifier le port source et le port de destination sur ledit dispositif source et le dispositif de destination.

6. Le procédé selon l'une quelconque des revendications précédentes dans lequel l'étape de détermination (804, 806) du fait que le dispositif source du datagramme Ip entrant est un client (501), ou un serveur (503), comprend l'étape supplémentaire consistant à :
* déterminer si la valeur du champ de Port de Destination (313), compris dans le datagramme IP, est égale à la valeur d'un port de destination sur un serveur (503), ou si la valeur du champ de port source (312), compris dans le datagramme IP, est égale à la valeur d'un port de source sur un serveur (503) .

7. Le procédé selon l'une quelconque des revendications précédentes, dans lequel le datagramme IP transporte des données en utilisant un protocole de niveau d'application, et dans lequel ladite étape de détermination (906) d'une adresse de serveur et d'un port de serveur, se référant à une première table (612), comprend les autres étapes consistant à :
si l'adresse de serveur et le port de serveur ne sont pas identifiés dans ladite première table (612) pour l'adresse de client (614), le port de client (615), l'adresse de destination (616) et le port de destination (617),
* identifier (1002) le protocole de niveau application utilisé par les données transportées dans ledit datagramme IP ;
* déterminer (1003) l'adresse de serveur et le port de serveur en se référant à une deuxième table (606), ladite deuxième table (606) comprenant, pour le protocole de niveau application identifié, une adresse de serveur (609) et un port de serveur (610), pour chaque client ou groupe de client ayant été identifié par une adresse de client (608), ou une plage d'adresses de client ;
si (1005) l'adresse de destination (311) et l'adresse de serveur (609) sont différentes, ou si le port de destination (313) et le port de serveur (610) sont différents :
* identifier une indication pour éliminer le datagramme IP dans ladite deuxième table (606), ladite deuxième table (606) comprenant, pour le protocole de niveau d'application identifié, une indication (611) pour éliminer le datagramme IP pour chaque client ou groupe de clients identifié par une adresse de client (608), ou une plage d'adresses de clients ;
si (1006) l'indication (611) d'élimination du datagramme IP est fixée :
* éliminer (1007) le datagramme IP ;
si l'indication (611) d'élimination du datagramme IP n'est pas fixée :
* créer (1008) un nouvel enregistrement dans ladite première table (612), comprenant :
* l'adresse de client (310, 608, 614) ;
* le port de client (311, 615) ;
* l'adresse de destination (312, 616) ;
* le port de destination (313, 617) ;
* l'adresse de serveur (609, 618) ;
* le port de serveur (610, 619)

8. Le procédé selon l'une quelconques des revendications précédentes, comprenant l'étape suppplémentaire consistant à :
* configurer ladite deuxième table (606), ladite deuxième table comprenant une table pour chaque protocole de niveau d'application supporté.

9. Le procédé selon l'une quelconques des revendications précédentes, dans lequel l'étape de configuration de ladite deuxième table (608) comprend l'étape consistant à :
* récupérer (702) une partie ou la totalité de ladite deuxième table (606) parmi l'un d'une pluralité de systèmes de serveurs (507) à l'intérieur du réseau IP (502).

10. Le procédé selon l'une quelconques des revendications précédentes, dans lequel l'étape de configuration de ladite deuxième table comprend l'étape consistant à :
* récupérer les mises à jour de la dite deuxième table (606) auprès d'un de la pluralité des systèmes de serveurs (507) à l'intérieur du réseau.

11. Le procédé selon l'une quelconques des revendications précédentes, dans lequel les étapes de récupération d'une partie ou de la totalité de ladite deuxième table (606) et de récupération des mises à jour de ladite deuxième table (606) comprennent l'étape supplémentaire consistant à :
* déterminer l'adresse de ladite une ou de la pluralité des systèmes serveurs (507) en stockant une partie ou la totalité de ladite deuxième table (505), en se référant à une troisième table (601).

12. Le procédé selon l'une quelconques des revendications précédentes, dans lequel l'étape de configuration de ladite deuxième table (606) comprend l'étape consistant à :
* recevoir une partie ou la totalité de ladite deuxième table de ladite une ou de la pluralité des serveurs systèmes (507) dans le réseau.

13. Le procédé selon l'une quelconques des revendications précédentes, dans lequel l'étape de configuration de ladite deuxième table comprend l'étape consistant à :
* recevoir des mises à jour de ladite deuxième table depuis ledit un ou la pluralité des systèmes de serveurs (507) dans le réseau.

14. Le procédé selon l'une quelconques des revendications précédentes, dans lequel l'étape de configuration de la deuxième table comprend l'étape consistant à :
* stocker localement ladite deuxième table (606) et/ou des mises à jour de ladite deuxième table (606) à l'intérieur du dispositif de réseau (506).

15. Le procédé selon l'une quelconques des revendications précédentes, dans lequel ladite pluralité de serveurs sont des serveurs de proche voisinage.

16. Un dispositif de réseau (5060), comprenant des moyens adaptés pour mettre en oeuvre le procédé selon l'une quelconque des revendications précédentes.

17. Un support lisible par ordinateur, comprenant des instructions pour mettre en oeuvre le procédé selon l'une quelconque des revendications 1 à 15.
